(19)

Europäisches
Patentamt

European
Patent Office

Office européen
des brevets

(11) **EP 4 712 511 A1**

(12) **EUROPEAN PATENT APPLICATION**

(43) Date of publication:
**18.03.2026 Bulletin 2026/12**

(21) Application number: **24200226.9**

(22) Date of filing: **13.09.2024**

(51) International Patent Classification (IPC):
**H04R 1/40** *(2006.01)*        **H04S 7/00** *(2006.01)*

(52) Cooperative Patent Classification (CPC):
**H04S 7/301; H04S 7/303;** H04R 1/403; H04R 1/406;
H04R 2201/025; H04R 2217/03; H04R 2430/21;
H04R 2430/23; H04R 2499/11; H04R 2499/15

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Harman International Industries, Inc.
Stamford, Connecticut 06901 (US)**

(72) Inventor: **KALINICHENKO, Victor
85640 Putzbrunn (DE)**

(74) Representative: **Kraus & Lederer PartGmbB
Thomas-Wimmer-Ring 15
80539 München (DE)**

(54) **INDIVIDUAL LISTENING ZONES FOR CONSUMER AUDIO DEVICES USING ULTRASONIC SPEAKERS**

(57)    A method and electronic consumer device for creating an individual spatial listening zone for a user provided. The method includes receiving an input audio signal and processing it to generate first and second ultrasonic electric audio signals. The ultrasonic signals are provided to first and second ultrasonic transducers which convert them into directional ultrasonic acoustic signals. These signals are directed to a spatial listening zone where the user is located. Through non-linear inter-action of the ultrasonic signals in air within the spatial listening zone, an audible sound signal is produced for the user that corresponds to the desired audio based on the input signal. The audible sound is substantially con-fined to the spatial listening zone and inaudible outside it. Various techniques for dynamically adjusting the spatial listening zone based on user position are disclosed. The system allows for creation of personalized audio experi-ences while minimizing disturbance to others nearby.

FIG. 1

**Description**

Technical Field

Various examples of the disclosure generally relate to audio reproduction by electronic consumer devices. Various examples of the disclosure specifically relate to methods and devices for creating individual spatial listening zones using directional ultrasonic speakers in portable and stationary consumer audio devices.

Background

Audio playback by electronic consumer devices in shared spaces often presents challenges in balancing personal listening experiences with the need to avoid disturbing others. Conventional electronic consumer devices, e.g., television sets and portable speakers, typically emit sound in wide angles, making it difficult to confine audio to a specific area. This can lead to conflicts in multi-user environments or public spaces. Current solutions to this problem, like personal headphones provide a private listening experience but can be uncomfortable for extended use and isolate users from their surroundings. Some users find wearing such devices unpleasant, particularly during physical activities or when a more natural listening experience is desired. Directional speaker technologies, similar to those used in museums or specialized installations create localized sound zones, but they often require large, expensive hardware equipment and are typically fixed in position. Such solutions are impractical for everyday consumer use, especially in home environments or with portable devices. Moreover, existing directional audio solutions may not easily adapt to changing listener positions or multiple users. They often require complex setup procedures and lack the flexibility needed for dynamic, real-world scenarios.

Summary

Accordingly, there is a need for advanced techniques for sound rendering by electronic consumer devices, which alleviate or mitigate at least some of the above-identified restrictions and drawbacks.

This need is met by the features of the independent claims. The features of the dependent claims define further advantageous examples.

In the following, the solution according to the present disclosure will be described with regard to the claimed methods as well as with regard to the claimed audio devices and audio systems, wherein features, advantages, or alternative embodiments can be assigned to the other claimed objects and vice versa. In other words, the claims related to the devices and systems can be improved with features described in the context of the methods, and the methods can be improved with features described in the context of the systems.

A method for creating an individual spatial listening zone for a user or listener of an electronic consumer device is provided. The method comprises several steps, which can be, at least in part, performed at the electronic consumer device. However, it is to be understood that, in some examples, at least some of these steps may also be executed remotely, such as on a cloud server or a separate processing unit.

In a step, an input audio signal is received. This input audio signal, and serves as the basis for a desired audible sound signal to be output for the user. In a step, the input audio signal is processed to generate first and second ultrasonic audio signals. The first and second ultrasonic audio signals are electric signals, that can, for example, be fed to ultrasonic transducers for generating ultrasonic sound, i.e., ultrasonic acoustic signals. The processing includes modulating one of the first and second ultrasonic electric audio signals as a carrier signal with a signal derived from the input audio signal. In a step, the first ultrasonic electric audio signal is provided to a first ultrasonic transducer. The second ultrasonic electric audio signal is provided to a second ultrasonic transducer. Both transducers are included in the electronic consumer device. For example, in portable devices like smartphones or tablets, the transducers could be positioned along the edges or on the back panel. For larger stationary devices such as portable speakers or televisions, the transducers might be arranged in an array configuration, potentially hidden behind an acoustically transparent grille or integrated into the device's bezel. In a step, the first ultrasonic transducer converts the first ultrasonic electric audio signal into a first directional ultrasonic acoustic signal, and the second ultrasonic transducer converts the second ultrasonic audio signal into a second directional ultrasonic acoustic signal. In a step, the first and second directional ultrasonic acoustic signals are directed to a spatial listening zone. The spatial listening zone is a limited zone in space, in which the user is located. In a step, an audible sound signal for the user is produced within the spatial listening zone. The audible sound signal substantially corresponds to the desired audible sound signal based on the input audio signal. The audible sound signal is produced through non-linear interaction of the first and second directional ultrasonic acoustic signals in air within the spatial listening zone, i.e. wherever two directional ultrasonic acoustic signals are interferencing.

An input audio signal may be understood as an electronic representation of sound data intended for playback. It may be a digital or analog signal containing information about the amplitude and frequency of sound waves over time. The input audio signal may be derived from various sources such as stored audio files, streaming media, or real-time audio input. Ultrasonic acoustic signals may be understood as high-frequency sound waves above the upper limit of human hearing, typically above 20 kHz. These signals can be used as carrier waves for audio information. Ultrasonic transducers may be devices capable of converting electrical signals into ultrasonic acoustic waves. They operate at frequencies beyond human hearing range and can produce highly directional sound beams. The desired audible sound signal may refer to the intended audio output that the user should hear within the spatial listening zone, and intended to closely match or represent the input audio signal.

A spatial listening zone may be understood as a confined area in three-dimensional space where the intended audio can be heard clearly. This zone is created by the focused interaction of ultrasonic waves, resulting in a localized area of audible sound. The non-linear interaction in air refers to the phenomenon where high-intensity ultrasonic waves interact in a non-linear manner, producing lower frequency components that fall within the human audible range.

A corresponding electronic consumer device is provided. The electronic consumer device could comprise, for example, one or more of audio-capable products, including but not limited to a stationary TV set, a Bluetooth speaker, a smartphone, a tablet, a laptop computer, a desktop computer, a smart home speaker, or a soundbar. These devices can incorporate the ultrasonic transducer technology to create personalized listening zones.

The electronic consumer device is configured for creating an individual spatial listening zone for a user. The electronic consumer device comprises a first ultrasonic transducer and a second ultrasonic transducer. A transforming circuit is operatively coupled to the first and second ultrasonic transducers.

The transforming circuit is configured to receive an input audio signal. The transforming circuit processes the input audio signal to generate first and second ultrasonic electric audio signals. The processing comprises modulating one of the first and second ultrasonic electric audio signals as carrier signal with a signal derived from the input audio signal. The transforming circuit provides the first ultrasonic electric audio signal to the first ultrasonic transducer and the second ultrasonic electric audio signal to the second ultrasonic transducer.

The first and second ultrasonic transducers are configured to convert the first and second ultrasonic electric audio signals into first and second directional ultrasonic acoustic signals, respectively. The electronic consumer device directs the first and second directional ultrasonic acoustic signals to a spatial listening zone. The spatial listening zone is a limited zone in space, in which the user is located.

Due to spatial overlap of the ultrasonic signals in the spatial listening zone, the first and second directional ultrasonic acoustic signals interact non-linearly with air within the spatial listening zone. This results in demodulation that produces an audible sound signal for the user. The audible sound signal substantially corresponds to a desired audible sound signal based on the input audio signal. The audible sound signal is substantially confined to the spatial listening zone and substantially inaudible outside the spatial listening zone.

The electronic consumer device is configured to perform the method according to any method or any combination of methods according to the present disclosure.

An electronic consumer device may be understood as a device designed for personal use that processes audio signals to create customized listening experiences. An electronic consumer device may comprise a portable or handheld electronic consumer device. It may include various audio processing components and transducers to manipulate and output sound. Such electronic consumer devices may be portable or stationary, they may be intended for entertainment and/or communication, and or other consumer applications involving audio output.

A transforming circuit may be understood as an electronic component or system, such as a Digital Signal Processor, DSP, that modifies input signals by means of running the computer program operating within the DSP. In this context, it processes audio signals and generates ultrasonic signals for the transducers. The circuit may include digital signal processors, modulators, and other components necessary for complex audio signal manipulation. Ultrasonic transducers may be understood as devices that convert electrical signals into ultrasonic acoustic waves. They operate at frequencies above the human hearing range, typically over 20 kHz. These transducers can produce highly directional ultrasonic sound beams due to the short wavelengths of ultrasonic waves. In general, ultrasonic acoustic signals, or sound signals from the transducers may be referred to as ultrasonic sound beams, which may originate from an ultrasonic speaker.

By the disclosed techniques, creation of a personalized audio experience for a user of an electronic user device is made possible. By confining the audible sound to a specific spatial zone, the method may reduce sound pollution in surrounding areas. The use of ultrasonic waves may allow for precise control over the sound field, improving audio clarity and directionality compared to traditional speaker systems. The non-linear interaction of ultrasonic waves in air may enable the production of audible sound without the need for large, visible speaker arrays, potentially allowing for more compact and aesthetically pleasing audio devices.

It is to be understood that the features mentioned above and features yet to be explained below can be used not only in the respective combinations indicated, but also in other combinations or in isolation, without departing from the scope of the present disclosure. In particular, features of the disclosed embodiments may be combined with each other in other embodiments.

It is to be understood that the features mentioned above and those yet to be explained below may be used not only in the respective combinations indicated, but also in other combinations or in isolation without departing from the scope of the disclosure.

Brief Description of the Drawings

These and other objects of the invention will be appreciated and understood by those skilled in the art from the detailed description of the preferred embodiments and the following drawings in which like reference numerals refer to like elements.

FIG. 1 schematically illustrates direct positioning of an ultrasonic beam from a TV device to create an individual listening zone, according to various examples.

FIG. 2 schematically illustrates indirect positioning of an ultrasonic beam of an ultrasonic beam from the TV device of Fig. 1 to create a further individual listening zone, according to various examples.

FIG. 3 schematically illustrates a block diagram of a TV device with integrated ultrasonic speakers and head tracking cameras for creating personalized listening zones, according to various examples.

FIG. 4 schematically illustrates a portable wireless speaker with an integrated ultrasonic speaker mounted on a rotatable platform, according to various examples.

FIG. 5 schematically illustrates a method for automated positioning of an ultrasonic beam from a portable wireless speaker in the horizontal plane, according to various examples.

FIG. 6 graphically illustrates a method for automated simultaneous positioning of an ultrasonic beam from a portable wireless speaker in both vertical and horizontal planes, according to various examples.

FIG. 7 schematically illustrates a configuration of directional microphones on a rotatable platform of a portable wireless speaker for differential control of beam positioning, according to various examples.

FIG. 8 schematically illustrates a block diagram of a closed-loop control system for automated positioning of an ultrasonic beam using differential microphone signals, according to various examples.

FIG. 9 schematically illustrates steps of a method for creating an individual listening zone, according to various examples.

FIG. 10 schematically illustrates an audio device, according to various examples.

Detailed Description of Examples

In the following, embodiments of the invention will be described in detail with reference to the accompanying drawings. It should be understood that the following description of embodiments is not to be taken in a limiting sense. The scope of the invention is not intended to be limited by the embodiments described hereinafter or by the drawings, which are taken to be illustrative examples of the general inventive concept. The features of the various embodiments may be combined with each other, unless specifically noted otherwise.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, elements, or other physical or functional units shown in the drawings or described herein may also be implemented by an indirect connection or coupling.

Hereinafter, techniques will be described that relate to audio reproduction in consumer electronic devices, particularly focusing on wireless speakers, TV sets, and other stationary and portable audio devices capable of playing back audio signals in indoor or outdoor environments. These techniques address the challenge of creating individual listening zones using directional sound technology, specifically ultrasonic speakers. The purpose of these techniques is to confine the audible sound to a limited area where the intended listeners are located, thereby minimizing disturbance to others in the vicinity. This approach aims to enhance the listening experience for users while reducing overall noise pollution, potentially enabling features such as a "night mode" for late-night viewing or listening without disturbing others.

By leveraging the directivity properties of ultrasonic technology, these techniques seek to create dedicated listening spaces that cater to the needs of modern consumers in various settings, from home entertainment systems to portable audio devices used in public spaces.

Some examples of the present disclosure generally provide for a plurality of processors, sensors, transducers, speakers or other electrical processing devices. All references to the circuits and other electrical devices and the functionality provided by each are not intended to be limited to encompassing only what is illustrated and described herein. It is recognized that any audio system, speaker or other processing device disclosed herein may include any number of microcontrollers, a general-purpose processor unit (CPU), a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed. In various examples, processing devices may be embodied as remote or cloud computing devices. It is to be understood, that other sensors may be used for detecting vibrations in solid-state bodies, including sensor arrangements with optical, mechanical, electro-magnetic, or capacitive structures, which may be used, in order to detect a vibration in a solid-state body of a sound transducing element.

Playing back audio at home or in public areas using loudspeakers, such as portable wireless speakers, may disturb other people in the vicinity. For example, if someone is doing sport exercises on a beach, using a portable wireless speaker playing back audio from their smartphone, it may create discomfort for other visitors of the beach. Another example is watching TV during the evening or nighttime, when other people may want to stay in a silent environment. However, acoustic waves emitted by conventional loudspeakers are usually distributed in all directions due to their physical nature, which cannot be overcome when using conventional transducers.

Current solutions to this problem have limitations. One approach to listening to audio without disturbing others is to wear personal ear- or headphones. This method delivers the acoustic signal personally and makes it inaudible (or nearly inaudible) to other people in the vicinity. However, for some people, wearing ear- or headphones may be uncomfortable, especially while doing sport exercises. Some individuals find it unpleasant to wear devices in their ears or to have an audio source very close to the ear.

Another approach for creating individual listening spaces is using directional speakers, such as electrostatic speakers or arrays of speakers. This technology is typically used in museums to play back audio information about exhibits only for specific spatial sweet spots where listeners are located. Other visitors staying apart, in front of other exhibits, or walking around will not hear the audio from that loudspeaker. There may be only reflections of small intensity from the floor and clothes, which could be slightly audible to other visitors but not significantly disturbing.

However, this solution assumes having a fixed sweet spot (i.e., the area where the sounds reproduced by the speakers are well audible) and fixing the loudspeaker at a certain position, typically above the listener's head. This approach is also rather expensive, as it requires using either an electrostatic speaker, which is costly, large, heavy, and requires special equipment for forming high-voltage signals, or a loudspeaker array, which is expensive due to the necessity of using Digital Signal Processing algorithms for forming directivity. The size of the loudspeaker panel is also rather large.

These existing approaches do not allow for the use of portable speakers that could produce omnidirectional sound and, when the situation requires, be switched into a "limited sweet spot" mode where the produced sound would be audible only in a dedicated, relatively small spatial area. While it would be possible to use directional speakers for TV sets by mounting them on the ceiling, this solution would significantly increase the overall cost of the TV system due to the high costs of directional speakers (whether electrostatic or array-based). Additionally, this approach would require professional installation to mount the speaker on the ceiling, feed it with cables, and hide these cables in channels for aesthetic purposes, further increasing the total costs. Consequently, this method is not applicable for TV products targeted as affordable systems.

The disclosed techniques aim to address these limitations by providing a method for creating an individual spatial listening zone for a user of an electronic consumer device, which can be performed by hardware components included in the electronic consumer device. The described methods use ultrasonic transducers to generate directional ultrasonic acoustic signals that interact non-linearly with air within a spatial listening zone, producing an audible sound signal that is substantially confined to the zone and inaudible outside it.

In various examples, the disclosed techniques provide a method and device for creating an individual spatial listening zone by supplying portable wireless speakers and TV sets with directional and compact ultrasonic speakers mounted on a rotatable platform. An ultrasonic speaker may refer to a device for producing directional audible acoustic waves. A single ultrasonic speaker may comprise of two ultrasonic transducers, connected via two digital to analog converters (DAC) with the DSP, which transform the digital input audio signal into ultrasonic digital audio signals. A digital input audio signal may be either directly applied to the input of the ultrasonic speaker, or be derived from the analog input audio signal by means of analog to digital converter (ADC).

When activated by the user through a "limited sweetspot" mode using a remote control (e.g., smartphone), the system deactivates conventional speakers, activates the ultrasonic speakers, and allows the user to set up a personal listening zone by adjusting the spatial orientation of the ultrasonic speakers. The purpose of the described techniques is to minimize the area where audio signals from mobile or stationary devices may disturb others in the vicinity. By focusing sound reproduction to a specific zone where the intended listeners are located, these methods aim to create dedicated listening spaces. This targeted approach seeks to confine the audible output to the immediate area of the user, thereby reducing sound spillage and potential disturbance to others nearby. Such techniques could prove particularly useful in shared living spaces, open-plan offices, or public areas where traditional audio playback might cause disruptions. By creating these individualized listening zones, the techniques aim to enhance the user's audio experience while simultaneously respecting the acoustic environment of those around them.

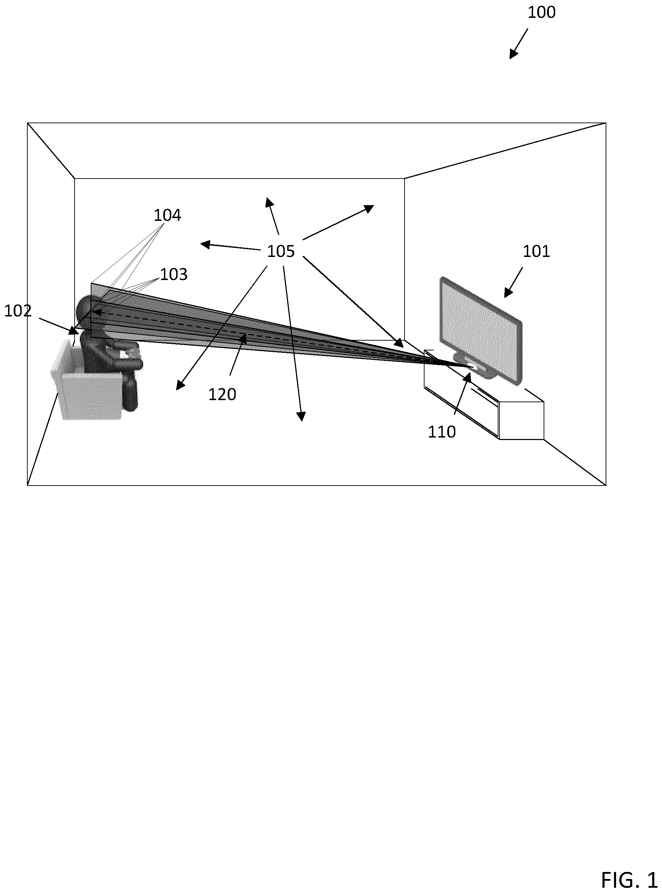

FIG. 1 schematically illustrates direct positioning of an ultrasonic beam 120 from a TV device 101 to create an individual listening zone 103, according to various examples.

As can be seen in Fig. 1, a listening environment 100, which is a room, contains various elements of the audio system and a listener 102. TV device 101, in general electronic consumer device 101, is equipped with an ultrasonic speaker 110 built into its hardware structure. This ultrasonic speaker 110 is configured to emit a highly directional ultrasonic beam 120, which is visualized as a conical projection from the TV device towards the user 102. The user or listener 102 is positioned within the room, seated at a distance from the TV device 101. The ultrasonic beam 120 is directed towards the user, for creating a focused audio experience only within the spatial listening zones 103, 104. The spatial listening zone 103 immediately surrounding the user's head has high audio quality and can be regarded as s sweet spot 103. This sweet spot 103 represents the optimal listening zone where the ultrasonic signals interact to produce the desired audible sound through non-linear demodulation in air.

Surrounding the sweet spot 103 is a low intensity zone 104. This area experiences some audible sound, but at a reduced intensity compared to the sweet spot. The low intensity zone demonstrates the spatial confinement of the audio signal. The remainder of the room, indicated by 105, is designated as the silence zone. In this area, the audio signal is substantially inaudible. The direct positioning of the ultrasonic beam 120 towards the user 102 allows for precise control over the audio delivery, enhancing the user's experience while reducing potential disturbance to others in the room.

Ultrasonic speakers are known in audio engineering. The principle of their functioning is based on partial nonlinearity of the medium (air and surfaces) for ultrasonic waves. This non-linearity of the medium can be demonstrated by emitting two ultrasonic waves with frequencies $f_1$ and $f_2$ ($f_1 \neq f_2$, $f_1, f_2$=40...55 kHz). With their interfering with each other in a medium, it leads to appearing parasitic additive and differential harmonics: $f_1+f_2$ and $f_1-f_2$ with the amplitudes significantly lower than the amplitudes of the original waves. For example, if $f_1$=49000 Hz, $f_2$=48000 Hz, then the corresponding additive and subtractive harmonics will be 97000 Hz and 1000 Hz respectively. With $f_1$ and $f_2$ being emitted to the air, three of the above frequencies $f_1$, $f_2$ and $f_1+f_2$ will be non-audible for the human ear as they are out of the hearing capability of the human ear, while $f_1-f_2$ will be audible. The appearance of the differential parasitic frequency is exploited in ultrasonic speakers.

An input audio signal is received, based on which a desired audible sound signal is to be output for the user. The input audio signal is processed to generate first and second ultrasonic electric audio signals, wherein the processing comprises modulating one of the first and second ultrasonic electric audio signals as carrier signal with a signal derived from the input audio signal. Each ultrasonic speaker is a box containing an electrical circuit with Digital Signal Processor (DSP), where signal processing algorithms for forming two ultrasonic channels are working. A transforming circuit may be referred to as the audio processing unit or digital signal processor (DSP) that generates the ultrasonic signals. The purpose of this algorithm is to form an amplitude modulation to one of these frequencies so that for the differential wave $f_1(t)-f_2(t)$ would contain at each time moment t an audio signal to be played back. DSP is electrically connected with the Analog-to-Digital Converter (ADC), which forms two sine waves with the frequencies $f_1(t)$ and modulated $f_2(t)$ fed to two ultrasonic emitters, also referred to as ultrasonic transducers, which transform electric signals to acoustic ultrasonic waves, which are to be spread in the air, interfering with it and hence, forming the above-mentioned additive and differential side-effect waves. Because the differential component is audible for the human ear, it is used as a target (desired) wave. Although its amplitude is significantly lower than the amplitude of the two main ultrasonic waves $\sin(f_1(t))$ and $\sin(f_2(t))$, it is well audible.

The first ultrasonic electric audio signal is provided to a first ultrasonic transducer, and the second ultrasonic electric audio signal is provided to a second ultrasonic transducer, included in the electronic consumer device. The first and second ultrasonic electric audio signals are converted, by the first and second ultrasonic transducers, into first and second directional ultrasonic acoustic signals, respectively. The first and second directional ultrasonic acoustic signals are directed to a spatial listening zone, the spatial listening zone being a limited zone in space, in which the user is located.

Ultrasonic speakers are known to have strong (narrow beam) directivity. It means that ultrasonic speakers being directed to a certain point in space, the generated desired differential acoustic signal will be audible only in a space around the line connecting the ultrasonic speaker and that point in the space, thus forming an acoustic "beam". In the rest of the space there will be no audible signals. Moreover, ultrasonic speakers are small and light. This property makes it possible to use them in portable speakers and TV-sets as additional speakers, which can be used in the mode when personal listening space must be formed. If there are no other people to be disturbed by the played back audio, the normal omni-directional speakers can be used.

As a result, an audible sound signal is produced for the user within the spatial listening zone, wherein the audible sound signal substantially corresponds to the desired audible sound signal based on the input audio signal, and wherein the audible sound signal is produced through non-linear interaction of the first and second directional ultrasonic acoustic signals in air within the spatial listening zone.

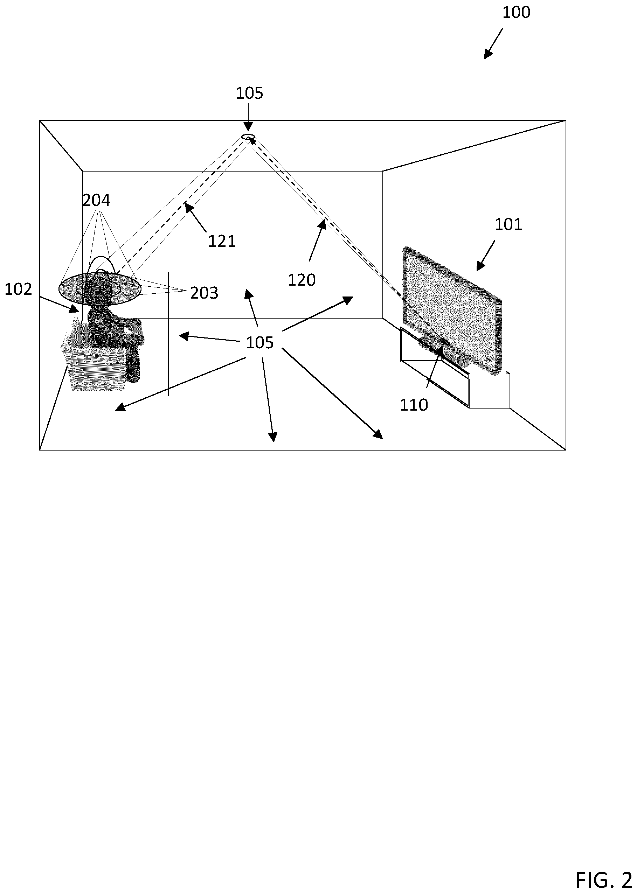

FIG. 2 schematically illustrates indirect positioning of an ultrasonic beam from the TV device 101 of Fig. 1 to create further differently shaped, individual listening zones 203,204, according to various examples.

Indirect positioning assumes that the ultrasonic beam is routed first to some surface, for example, ceilings or walls of the room, and then reflected to the listener's head, as can be seen in Fig. 2.

Ultrasonic waves are known to have good reflectability - property, which makes it possible to use ultrasonic speakers for forming personal listening spaces located outside the zone of direct "visibility" of the speaker. For example, if the speaker is located around the corner of the place where individual listening space shall be created, ultrasonic speaker can create it if the beam will be directed to the wall and then, having been reflected from it, will change its direction, possibly going to the area, which is not directly visible to the ultrasonic speaker.

In Fig. 2, the utilizing the reflectability is demonstrated, wherein the ultrasonic beam 120 emitted by the integrated ultrasonic speaker 110 of the TV device 101 is directed to the top and then reflected at a reflection location 105 from the ceilings towards the user, as shown in Fig. 2. The reflected ultrasonic sound beam is directed towards the user 102, and creates spatially restricted listening zones 203, 204. The spatial listening zones 203,204 are stronger restricted in the horizontal plane than in Fig. 1.

The ultrasonic beams depicted in the figures correspond to or comprise two ultrasonic beams, each emitted from one of the two ultrasonic transducers. These beams represent the first and second directional ultrasonic acoustic signals. When these ultrasonic signals interact in the air within the spatial listening zone, they produce the audible sound signal through non-linear demodulation.

The disclosed techniques allow for flexible beam path configuration. The two ultrasonic beams from the first and second transducers can be directed along different paths. For example, one beam may follow a direct path to the spatial listening zone, while the other beam may take an indirect path, such as reflecting off a surface like a wall or ceiling. It would at least be possible to direct the two ultrasonic beams along different reflection paths. Each beam from the first and second transducers can be independently aimed to reflect off distinct surfaces in the environment. For instance, one beam might be reflected off a side wall while the other is reflected from the ceiling.

Comparing direct and indirect methods of ultrasonic beam positioning, one can list their features in the following table:

| Property | Direct beam positioning (Fig. 1) | Indirect beam positioning (Fig. 2) |
|---|---|---|
| Sweet spot | 1. Narrow<br>2. Long | 1. Middle<br>2. Short |
|  | 3. All points around the line "ultrasonic speaker - user's head" (before and after the head) are audible. | 3. Only the limited zone in front and behind the user's head is audible |
| Accessibility of invisible positions | Not possible | Possible |
| Sound intensity at the same emitting power | High | Low |
| Intensity of the laser beam at the user's face | High | Low |

In various examples, a TV-set can be supplied with both a set of conventional speakers (e.g. soundbar) to be used for normal play-back, and ultrasonic speakers to be used in case conventional speakers may disturb other occupants of the same room.

Conventional speaker may refer to loudspeakers emitting sound or acoustic signals in a frequency range, which is audible to human ears.

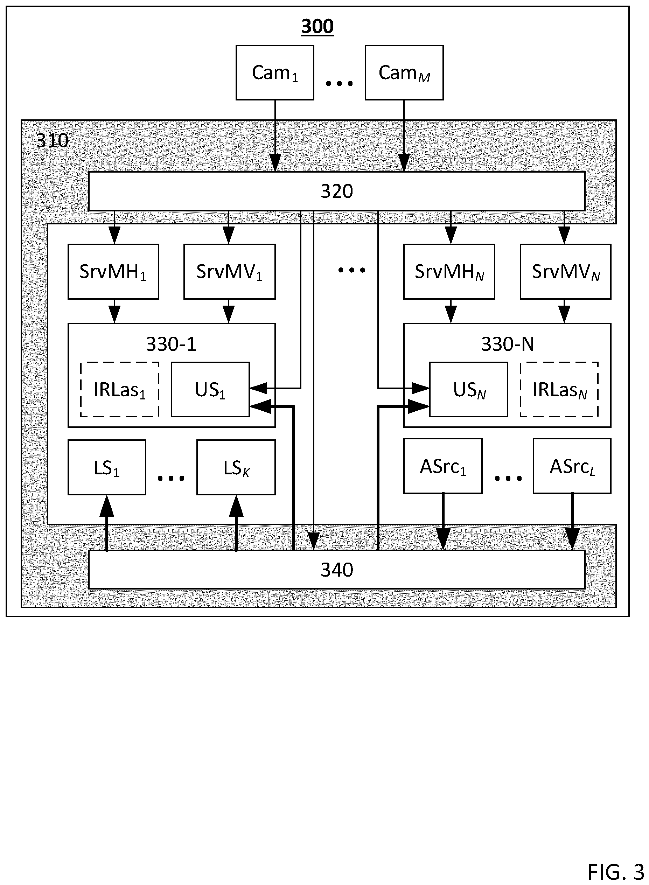

FIG. 3 schematically illustrates a block diagram of a TV device 300 with integrated ultrasonic speakers $US_1$ to $US_N$ and head tracking cameras $Cam_1$ to $Cam_N$ for creating personalized listening zones, according to various examples.

In addition to what has been described for Figs. 1 and 2, the TV device 300 can be supplied with at least one head tracking camera, which continuously detects and monitors the position of the head. Based on the video stream obtained by the camera, the video image processing algorithms may form the commands for changing the angular position of the beam depending on movements of user during the play back, thus providing the optimal sound quality for the user. Moreover, there can be several ultrasonic speakers $US_1$ to $US_N$, each for creating personalized sweet spots for every listener/watcher. At the same time, it is enough to have only one tracking camera for tracking the head positions of all users. The tracking camera(s) can be integral parts of the TV sets or detached devices connected via wired or wireless interface. The idea of use of the tracking cameras for following the position of the listener's head together with the correspondent tracking algorithms is not new, but in combination with ultrasonic speakers for controlling their angular position, thus directing the ultrasonic beam and creating sweet spots for every listener, this idea is novel. An angular position may refer to an orientation or pose of an ultrasonic transducer or ultrasonic beam.

The TV device 300 comprises a processing unit 310, which serves as the central computational core of the system. Within this processing unit, a control unit 320 is implemented to manage and coordinate the various components and processes. An audio signal processing unit 340 is responsible for processing the input audio signals and generating the ultrasonic electric audio signals required for creating the spatial listening zones.

The TV device 300 contains $K$ conventional built-in loudspeakers $LS_1...LS_K$ and $N$ ultrasonic loudspeakers $US_1...US_N$, mounted on $N$ Rotatable platforms, each having two degrees of angular freedom: in horizontal plane and in vertical plane. For rotating these platforms in each plane, there are two servo motors: $SrvMH_n$ - for rotations in horizontal plane, and $SrvMV_n$ - for rotations in a vertical plane, $n=1...N$. Being controlled by the Control Unit, these servomotors provide positioning the ultrasonic beams emitted by the ultrasonic speakers $US_1...US_N$, which are installed on the rotatable platforms 330-1 to 330-N, in the front half-space of the TV device 300. The control unit 320, which can physically operate in a microcontroller or in another processor, is responsible for several sub-functions. One of its functions is processing the video streams obtained from the head tracking video cameras $Cam_1...Cam_M$, $M \geq 3$. Supplied with infrared sensors to be able to work in dark spaces, these cameras deliver images to the video processing algorithm, which identifies the positions of the users' heads in each video frame and calculates the coordinates of the center of the head of every listener in respect to cameras at each discrete time moment. In order to be able to calculate not only the angular position of the head in respect to the position of each ultrasonic speaker, but also 3-dimensional coordinates the number of cameras shall be 3 or more, thus, using three images of the same space made from the different positions, with applying methods based on stereometry. For better precision of calculations of head coordinates, the cameras may be located at distances from each other, e.g., 2...5 cm. The second function of the control unit 320 is angular positioning of the ultrasonic beams to ensure that each beam meets its target head. For this purpose, there can be various control algorithms applied. The simplest one is direct control without feedback since the positions of all ultrasonic speakers in respect to cameras are known. Direct control is the simplest and fastest method for positioning the ultrasonic beams. However, the precision of direct control may suffer, especially if there is an error in the actual angular position of the moving platform in respect to the desired one. There can be other reasons for errors, e.g., any minor angular shift of the ultrasonic speaker, which may occur during exploiting the system, or aging effect, may lead to mismatching of the desired and actual sweet spot. In order to eliminate this problem, one can use closed-loop control. For this reason, one can mount on all rotatable platforms 330-1 to 330-N infrared lasers $IRLas_1... IRLas_N$ for emitting the laser beam directed to the same position as the ultrasonic beam. Being invisible to the human eyes, these laser beams will be visible to infrared cameras, which can then evaluate the errors in actual angular positions of each rotating platform, thus providing the input to the closed-loop control system to correct the error. Closed-loop control may be a little less quick, but more precise.

The aspect of safety in using the low-intensity invisible infrared laser beam directed straight or via reflection to the human's face (especially, if accidentally affected his eyes) is not discussed here. However, we assume that after additional medical investigation, admissible intensity and continuous duration of radiation can be found. For example, the laser beam can be activated only in case significant user's head movement is detected (e.g., more than 7-10 cm) so that the correction of the angular position of the correspondent moving platform is required. The duration of the radiation of the laser beam can be several milliseconds, just to make it possible for the cameras to detect the actual angular position of the correspondent rotating platform.

The decision whether to use direct or any type of indirect beam positioning can be made by the listener by means of changing the settings (e.g., via remote control). A reflection surface for the indirect positioning (e.g., ceilings or any wall) can also be specified via settings.

There can also be a combination of feed-forward (direct) and closed-loop control considered, wherein the direct control will be used in normal tracking mode, while the closed-loop control can be used in calibration mode, which will be activated in seldom cases to eliminate possible aging effects and other reasons for mismatching assumed angular position of the camera with its real angular position, then storing the detected biases (mismatches) as a correction coefficients in memory (e.g. in EEPROM).

The third function of the control unit 320 is searching for the users' heads and defining their 3-dimensional coordinates before the control system starts tracking them. This step includes analysis of the image and identification of human's head. Image analysis algorithms are well known and have been used for years. We will not go into details here.

The fourth function of the control unit 320 is sound management, in particular, activating individual listening zones mode by sending the correspondent command to the Audio Processing Unit, thus enabling ultrasonic speakers $US_1...US_N$ and disabling conventional speakers $LS_1...LS_K$. Deactivation of the individual listening zones mode is also done by the Control Unit.

The audio processing unit 340 is responsible for receiving the signal from any of the Audio Sources $ASrc_1...ASrc_L$ and for performing audio processing algorithms, for example, volume, bass, treble, balance functions, multichannel audio processing, surround algorithms, etc., as well as execution of control commands sent from the Control Unit. Audio Processing Unit can be physically implemented on a DSP (Digital Signal Processor), which can be the same or different processor used for implementation of the Control Unit.

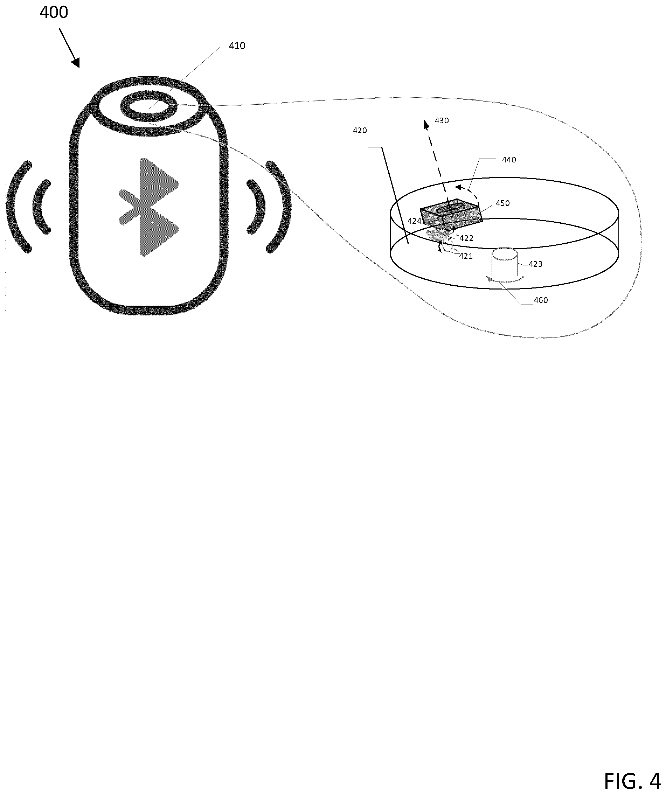

Another application of ultrasonic speakers for creation individual listening zones is in portable wireless speakers, as will be described with regard to Fig. 4. For this purpose, portable speakers can be supplied with additional ultrasonic speakers mounted on some moving platform, which would allow adjustment of the beam position. In case portable speakers do not seem to disturb others, normal mode can be activated by the user, where the conventional (e.g., electrodynamic) loudspeaker will be playing back the audio content. However, in case played back audio can disturb others, individual listening zone mode based on use of the integrated ultrasonic speakers can be activated.

FIG. 4 schematically illustrates a portable wireless speaker with an integrated ultrasonic speaker mounted on a rotatable platform, according to various examples.

As can be seen in Fig. 4, a portable wireless speaker comprises an integrated ultrasonic speaker mounted on a rotatable platform, which can perform any method or combination of methods according to the present disclosure.

The portable wireless speaker 400 has a Bluetooth capability as indicated by the symbol on its front. On the top of the speaker, position 410 is designated for mounting the rotating platform with the attached ultrasonic speaker.

The right side of Fig. 4 provides a detailed view of the rotatable platform 420, including mechanical and electrical aspects. This platform is designed to control the direction of the spatial listening zones, as follows. A small box 450 comprising two ultrasonic emitters is mounted on the platform. These emitters correspond to the first and second ultrasonic transducers described in the claims. Arrow 430 indicates the direction of the emitted ultrasonic sound, which can be adjusted by rotating the platform. The platform allows for rotation in the horizontal plane 460, enabling the ultrasonic beam to be directed to different angles around the speaker. Additionally, the platform can tilt in the vertical plane 440, allowing for adjustment of the beam's elevation.

Adjustment of the direction of the ultrasonic beam can be made either manually, or by means of servomotors. Manual positioning of the mini box with the ultrasonic emitters in horizontal plane can be made by rotation of the rotating platform clockwise or counterclockwise. For adjustment the beam in the vertical plane the mini box can be mounted on an axis 424. For fixing the inclination in the vertical plane, a special holding mechanism can be foreseen, which could fix the angular position of the mini-box, for example, a clamp (not shown on Fig. 4) holding the mini-box from its sides. A more convenient way for changing the angular position of the beam is to supply the rotating platform with one or two servomotors: one servomotor will change the rotating platform around the gear axis 423. Rotation in the vertical plane can be done by another servomotor. By means of the gear wheel 422 and gear half-wheel 421 it can incline the mini box to the desired angle. Both servomotors can be controlled remotely, e.g., using the smartphone connected to the speaker via Bluetooth or via other wireless channels.

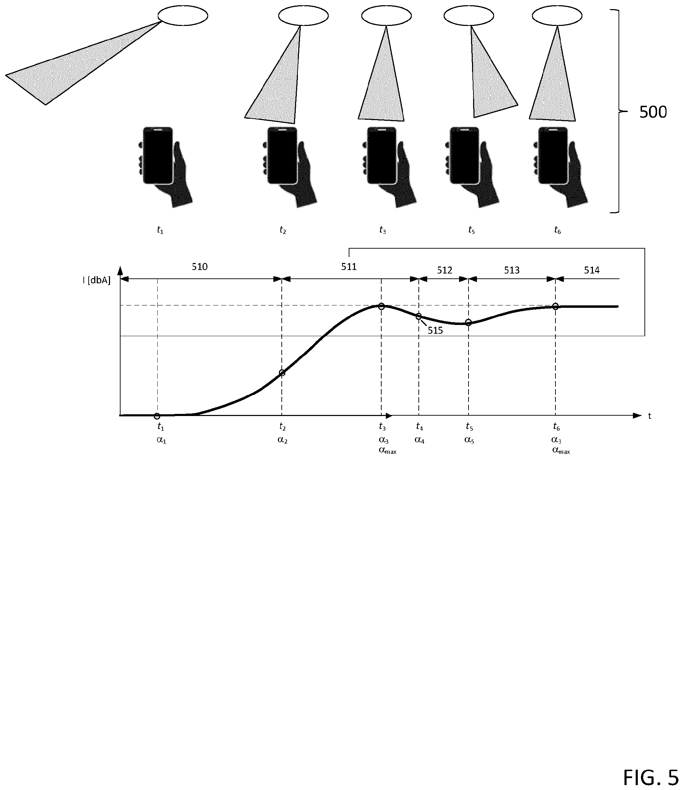

On the control application user can change the azimuth and vertical angles by means of intuitive graphical user interfaces, e.g., request rotating clockwise or counterclockwise until user stops it, e.g., after starting to hear the sound or after the desired angle is reached. Moreover, if the device used for the remote control of angular positioning of the ultrasonic beam has integrated microphone (e.g., Smartphone, or Tablet PC), then automated positioning is possible, as will be described with regard to Fig. 5.

This rotatable platform design enables control over the direction of the ultrasonic beams, wherein the dual-axis rotation (horizontal and vertical) allows for adapting to different user positions and room configurations for the individual spatial listening zones.

FIG. 5 schematically illustrates a method for automated positioning of an ultrasonic beam from a portable wireless speaker in the horizontal plane, according to various examples.

As can be seen in Fig. 5, a graph is depicted with time on the x-axis and sound intensity I in dBA on the y-axis. Above the graph, there are diagrams showing the angular positions of an ultrasonic beam relative to a mobile device at different time points. The graph represents to a microphone signal, in other words audio feedback signal, received at the mobile device based on a test signal from first and/or second transducers. Based on the feedback signal, a characteristic, in this example, an intensity of the microphone signal, can be determined, in order to determine and send an angular correction control signal for adjusting the direction of the first and second directional ultrasonic acoustic signals.

As will be described, an optimal angular position for the transducers is identified, based on the monitored microphone signal, which corresponds to the user's position. Further, the direction of the first and second directional ultrasonic acoustic signals emitted by the ultrasonic transducers can be adjusted to align with the identified optimal angular position.

As an overview, the process can be divided into several stages, marked by reference time points $t_1$ through $t_6$. At time point $t_1$, the beam is not directed at the mobile device, resulting in no sound detection. At time point $t_2$, as the beam begins to rotate, low intensity sound is detected. At time point $t_3$, the beam approaches the optimal position, resulting in high intensity sound. At time point $t_4$, a stop command is issued. At time point $t_5$, rotation of the beam stops. At time point $t_6$, the beam reaches the position of maximum sound intensity.

The angular orientations of the beam relative to the mobile device are denoted as $\alpha 1$ through $\alpha 5$, with $\alpha max$ representing the optimal orientation for maximum sound intensity. The adjustment process is broken down into several phases. In phase 510, initial counterclockwise rotation is performed with high angular speed. In phase 511, counter-clockwise rotation slows to a lower speed. Phase 512 corresponds to a breaking phase as the system detects high intensity. In phase 513, low speed clockwise rotation is performed, fully operated by the wireless speaker without extra commands from the control application. In phase 514, the rotation stops, wherein at timepoint $t_4$, 515, a "Stop" command is issued. The diagram at the top 500 shows the corresponding various angular positions/orientations of the beam relative to the mobile device throughout this process. This automated method allows the ultrasonic beam to find the optimal position for delivering maximum sound intensity to the target mobile device, improving the effectiveness of the individual listening zone.

With regard to the above time points and phases, the process can be described in more details as follows. We assume that the angular altitude (vertical plane) is fixed in the predefined position (e.g. +20 degree), and that the best azimuth orientation (horizontal plane) shall be found, where the maximum intensity of the audio signal is perceived. For example, after coupling with the portable wireless speaker, for example, via Bluetooth, Smartphone can initiate playing via portable wireless speaker some periodic test signal (e.g., pure tone of 440 Hz). At the start time $t_1$ the integrated microphone of the Smartphone does not detect the test tone because the angular position of the ultrasonic speaker in the horizontal plane is far from the direction to the microphone.

Then the special control application can send a command to the wireless speaker to start rotation in the horizontal plane, for example, in counterclockwise direction (the direction of the initial rotation is not important). While rotating the wireless speaker keeps sending the instantaneous angular position of the rotating platform in respect to some predefined "zero" position. These values, being sent at some discreteness (e.g., with the sampling frequency 50 Hz), can be used by the application as acknowledgements that rotation has been started and for detection of the actual instantaneous speed. Later these values will be used for precision positioning the rotating platform to the max intensity position. At some time $t_2$ the microphone starts detecting the test tone of certain (low) intensity. After continuing rotation in the same direction but with the lower speed, the rotating platform passes at some point $t_3$ the direction where the intensity is maximal. However, the application cannot still determine whether it is maximal intensity, or not. Therefore, the rotating platform continues rotating the same direction with the same speed until the decrease of the intensity of the test signal is detected (point $t_4$). At this point the control application sends the command to stop rotation. At the same time the angular position $\alpha_{max}$ of the max intensity is defined and memorized. Defining this position is easy: it is the angular value received from the wireless speaker, at which the max intensity has been detected. Due to some inertia, the rotating platform cannot stop rotation immediately, but continues rotating until time $t_5$ (the real distance between two points $t_4$ and $t_5$ is smaller, but for better understanding we artificially enlarged this time distance in Fig. 5). After that the application may send the command to the wireless speaker to rotate to the angular position $\alpha_{max}$ without controlling the entire process, but with only needed confirmation that the requested angular position has been reached and that the rotation is stopped. If, for some reason, user needs to correct the optimal angular position of the beam (e.g., in case there are several listeners, whose position may slightly differ from the position of the listener with the control application), he can do it manually in the same application, which will provide the corresponding GUI.

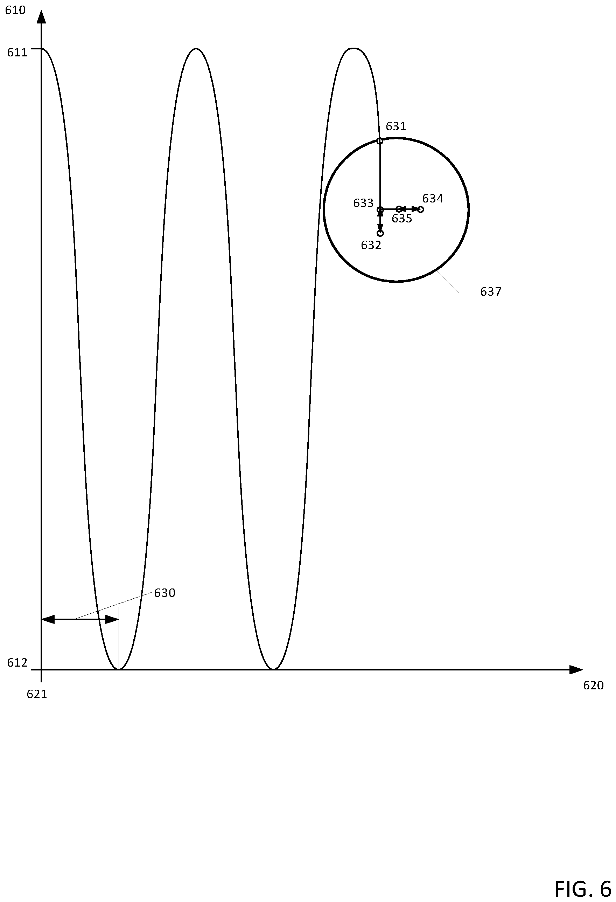

In other examples, the algorithm used in the control application can perform the automated simultaneous search of the optimal angular position in both degrees of freedom: vertical and horizontal. For this reason, the rotation in the horizontal plane shall be slower so that during the horizontal angular motion equivalent to half of the angular width of the beam in the horizontal plane the vertical motion shall cover the entire angular range from the highest vertical position to the lowest one, or vice-versa. This will guarantee that even in the worst-case scenario the beam will meet the angular position of the microphone of the mobile device used for controlling the beam position. The graphical representation of the angular positioning of the beam while searching the optimal point is demonstrated in Fig. 6.

FIG. 6 graphically illustrates a method for automated simultaneous positioning of an ultrasonic beam from a portable wireless speaker in both vertical and horizontal planes, according to various examples.

The graph shows an acoustic search pattern that represents the movement of the ultrasonic beam in both vertical and horizontal planes. The vertical axis 610 represents the vertical angular position, with 611 indicating the highest vertical angular position and 612 showing the lowest vertical angular position. The horizontal axis 620 represents the horizontal angular position, with 621 marking the starting position in the horizontal plane. The oscillating movement begins at the top 611 and progresses downward and horizontally, searching for the optimal beam position. In order not to miss the angular position of the user, which is detected by the microphone of the gadget, one period of the oscillations shall not exceed the width of the beam. The width of the oscillating pattern, indicated by 630, represents half of the beam width.

As a summary, the key points in the optimization process are marked as follows. Point 631 represents the point where a signal is first detected. Here, the horizontal angular motion stops, and only vertical motion continues. From points 631 to 632, the intensity of the signal changes, first increasing and then decreasing. At point 632, the vertical angular motion stops because the signal intensity has decreased. At point 633, the system returns to the maximum intensity point in the vertical plane. From point 633 to 634, the search continues in the horizontal plane. At point 634, the horizontal angular motion stops as the signal intensity has decreased again. At point 635, the system returns to the maximum intensity point in both horizontal and vertical planes, which is the optimal position for the ultrasonic beam.

The circular area labeled 637 represents the angular space where the acoustic signal is received by the microphone. This area encompasses the optimal beam position and the surrounding region where the signal is detectable.

This method allows for precise, two-dimensional positioning (angular position in the vertical plane and angular position in the horizontal plane) of the ultrasonic beam to create the most effective individual listening zone for the user, as will be described in the following in more detail. Angular correction control signal may be sent as command sent to adjust the direction of the ultrasonic beam.

When screening the space in the sinusoidal law as depicted in Fig. 6, the ultrasonic beam will reach point 631, where the microphone will detect the test signal for the first time. At this point the horizontal rotation shall stop and only rotation in the vertical plane shall remain to find the position 3, where the maximum intensity of the test signal is detected. Point 633 cannot be found at once, but by means of comparing the intensity at various points during vertical motion. Thus, during the vertical motion the beam will firstly pass the point 633, where the maximum intensity is and reach some point 632, where the intensity is lower than at angular position 633. Only by comparing the intensities at different points the optimal vertical position with the highest intensity can be found. Having stopped vertical motion at point 632 and having already information that the maximal intensity was at point 633, the application returns the beam to point 633, keeping all this time horizontal position unchanged. After the vertical position with the highest intensity is found, the motion in the horizontal plane is started, keeping the vertical angular position fixed. During this horizontal motion the beam will pass point 635, where the maximum intensity of receiving via microphone of the control mobile device will be detected. But like in case of vertical motion it is possible to detect that the maximum is reached only by comparing the intensity at various points. Therefore, the horizontal motion will stop only when some point 634 will be reached, after the intensity of the test signal will start decreasing. Then the control algorithm will return the beam back to point 635. Thus, the automated detection of the optimal position will be found. The control application may give the user the possibility to correct the angular beam position manually after the optimal point is found. This may be needed, for example, in case there are several users, whose angular position in respect to the portable wireless speaker may differ compared to the angular position of the person who was holding the mobile device during screening the space.

The depicted in Fig. 6 curve is time invariant. It shows the mutual proportion between angular motions in the horizontal and vertical planes. It makes sense to keep rotation in the vertical plane at the highest speed of the servomotor, while the rotation speed in the horizontal plane shall be selected in such a manner to keep the above proportion.

In addition to what has been mentioned above, for getting the clear reference, where the beam is directed, mini-box can be supplied with the light with the narrow beam showing the current angular position of the mini-box.

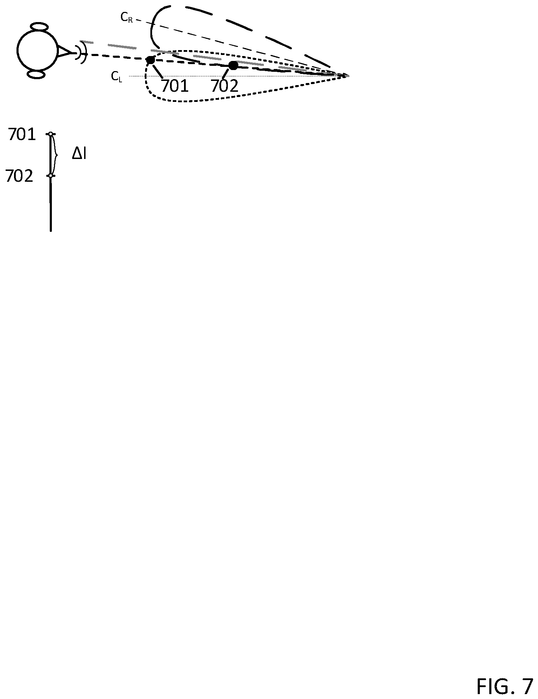

Another way for setting an angular position could be in using human's voice, which will be used as a reference signal for automated definition of the angular position of the human's head. For this purpose, the rotating plate shall be supplied with one or more directional microphones. In the case of the use of the single microphone, the direction is defined using a search algorithm, which assumes rotation of the rotating plate and the mini box until the intensity of the sound is maximized. However, this approach may require a relatively long time, during which the user shall keep talking, keeping the loudness of his voice on the same level. Precision may also suffer. A more intelligent and precise way of beam positioning is to use differential control by means of installing four directional microphones: two in vertical plane and the other two - in horizontal plane, as will be described with regard to Fig. 7.

FIG. 7 schematically illustrates a configuration of directional microphones on a rotatable platform of a portable wireless speaker for differential control of beam positioning, according to various examples.

Fig. 7 shows a top-down view of a speaker system with two directional microphones, labeled $C_L$ (left) and $C_R$ (right). These microphones are positioned symmetrically with respect to the center of the ultrasonic emitter.

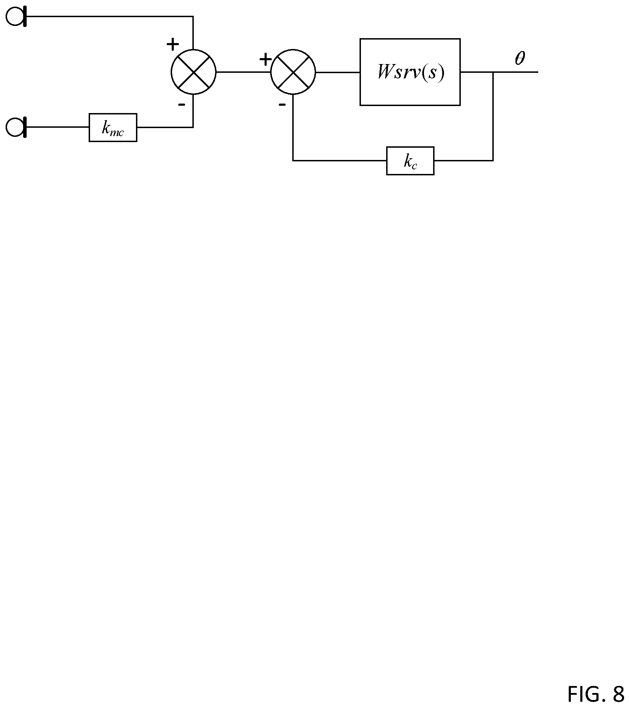

The directivity patterns of the microphones are depicted by dotted lines for the left microphone and dashed lines for the right microphone. These patterns represent how the microphones are more sensitive to sounds coming from certain directions, which the highest sensitivity in the center. Two points, 701 and 702, are marked on the directivity patterns. These represent the intensity of the signal received by each microphone. The Intensity of the signal received by the left (dotted) microphone 701 is higher than the intensity of the signal received by the right (dashed) microphone 702. The difference in intensity between these two points is shown as $\Delta I$, which represents the difference in intensity 701,702 of the received voice by the two microphones. This difference is crucial for determining the optimal angular position of the ultrasonic speaker. The angular position of each pair of microphones is different, which allows the system to exploit the effect of different directivities. This leads to different intensities of the electrical signals received by the two microphones. The symmetrical positioning of the microphones relative to the ultrasonic emitters enables the system to accurately determine the position error in the horizontal plane based on the difference in signal amplitudes. By analyzing the ΔI value, the system can automatically adjust the angular position of the ultrasonic speaker to optimize the sound delivery to the intended listening area. This method allows for precise targeting of the ultrasonic beam towards the user's position, enhancing the effectiveness of the individual listening zone creation. A similar approach with two microphones can be introduced for finding optimal direction in the vertical plane. The control circuit, as shown in Fig. 8, will start compensating for the difference by applying the correspondent execution signal to the servomotor, which will define the direction (clockwise or counterclockwise) and the rotation speed.

FIG. 8 schematically illustrates a block diagram of a closed-loop control system for automated positioning of an ultrasonic beam using differential microphone signals, according to various examples.

At each next time moment, while the servomotors are rotating, the amplitudes of electrical signals from each pair of microphones will be compared. As this difference shall be smaller the amplitudes of the executive signals (which are proportional to the error) will decrease, thus, decreasing the rotation speed of the correspondent servomotor. When the difference is zero, the correspondent servomotor shall stop rotating, i.e., both microphones in the pair receive the same intensity of the user's voice. This means that the angular position of the beam in the correspondent plane is correct. Servomotor is an inertial mechanism, which has the transfer function in Laplace transform domain:

$$W_{srv}(s) = \frac{k_{srv}}{s(1+T_{srv}s)} \, ,$$

where $k_{srv}$ - transfer gain which shows how powerful the servomotor is, $T_{srv}$ - inertia time constant, s- complex valued variable used in Laplace transform. A multiplier s in the denominator means pure integrator. Indeed, angular rotation speed is proportional to the applied voltage. Angular position $\theta$ in respect to the starting angular position will be an integral of the angular speed.

The selectable control gain $k_c$ in the feedback chain regulates the speed of control. The more it is the higher will be the reaction of the control system. However, if selected too high $k_c$ may lead to overcontrol, thus, causing oscillations. In the worst case it can lead to instability of the system. This parameter shall be set up carefully while tuning the system. It can also be obtained by calculations using certain optimization criterion, e.g., combined criterion assuming fastest speed and avoiding oscillations. The optimal value for this gain can also be obtained from modeling the entire system. Methods for finding the optimal values for the control gains are well known in the theory of automatic control. They have been used for decades.

It should be noted that in case the device is used in a room, the beam can be directed to the ceilings, where the sound will be reflected from. In this case angular positioning using the voice is applicable only in a horizontal plane (azimuth). The angular position of the beam in a vertical plane shall be corrected manually.

The above automatic closed-loop control system works only if the user is located between two center lines of the directivity diagrams of both microphones $C_L$ and $C_R$ respectively. If it is not the case, the search shall be performed. During the search procedure the servomotor will start rotation until it reaches the position where user's voice is located between the above center lines. Physically this state can be detected by fixing the state where signal in the intensity of the signal in the left channel starts decreasing, while the intensity of the signal in the right channel keeps increasing; or vice-versa. Once this state is fixed, the above automated high-precision control loop will start working, thus compensating for the remaining error.

To ensure that the above method would work also in noisy environments, where multiple voices and surrounding noises can be present, the user's voice shall be distinguishable from the other voices and noises. Therefore, it makes sense to use some specific signal, for example, long vowel "A-A-A", or whistling. A special algorithm will filter out all other noise signals except the reference signal produced by the user.

For selecting "normal mode" and "personal listening space mode" a remote control can be used. In the normal mode, ultrasonic speakers are not used, i.e., the sound is generated by the normal (e.g., electrodynamic) speaker(-s). In the personal listening space mode, the normal speaker gets inactive, and the sound is generated solely by ultrasonic speakers. Selection of mode can also be done using the voice command. For this purpose, the digital signal processing part of the portable speaker shall be supplied with the speech recognition algorithm for recognition the command for switching the mode. This algorithm can be tuned for accepting command phrases in several languages. It can also be trained for accepting only the owner's voice, declining any commands from other occupants of the listening space.

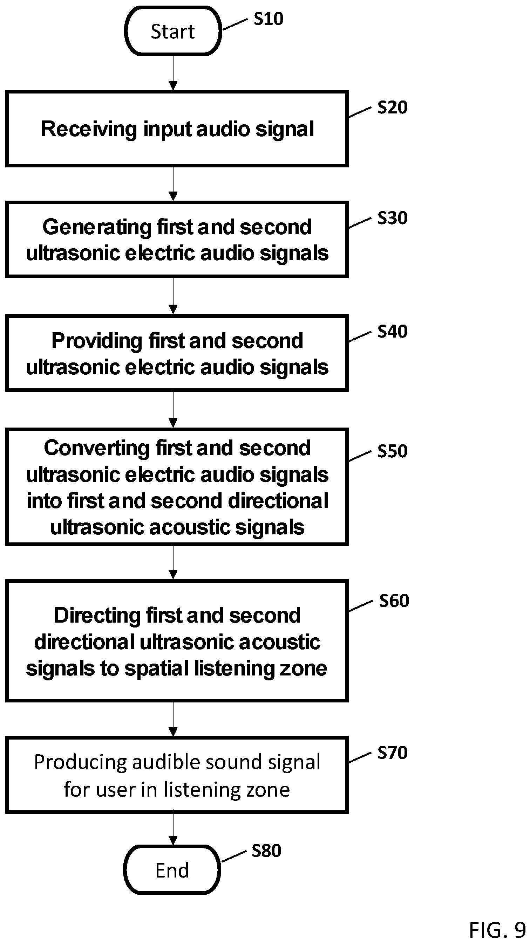

FIG. 9 schematically illustrates steps of a method for creating an individual listening zone, according to various examples.

The method starts in step S10. In step S20, an input audio signal is received, based on which a desired audible sound signal is to be output for the user. In step S30, the input audio signal is processed to generate first and second ultrasonic electric audio signals, wherein the processing comprises modulating one of the first and second ultrasonic electric audio signals as carrier signal with a signal derived from the input audio signal. In step S40, the first ultrasonic electric audio signal is provided to a first ultrasonic transducer, and the second ultrasonic electric audio signal to a second ultrasonic transducer, included in the electronic consumer device. In step S50, the first and second ultrasonic transducers convert the first and second ultrasonic electric audio signals into first and second directional ultrasonic acoustic signals, respectively. In step S60, the first and second directional ultrasonic acoustic signals are directed to a spatial listening zone, the spatial listening zone being a limited zone in space, in which the user is located. In step S70, an audible sound signal is produced for the user within the spatial listening zone, wherein the audible sound signal substantially corresponds to the desired audible sound signal based on the input audio signal, and wherein the audible sound signal is produced through non-linear interaction of the first and second directional ultrasonic acoustic signals in air within the spatial listening zone. The method ends in step S80.

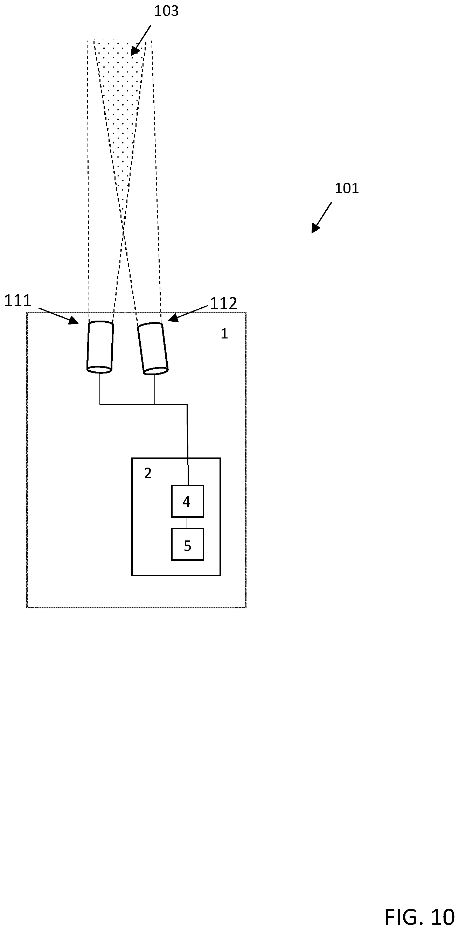

FIG. 10 schematically illustrates an audio device 101, according to various examples.

The audio device 101 can, for example be an electronic consumer device as described throughout the present disclosure, and is configured to create an individual spatial listening zone for a user. The audio device comprises two ultrasonic transducers 111 and 112, positioned to emit directional ultrasonic acoustic signals, represented by the dotted cone shape labeled 101 above them. The audio device comprises a control device 2, which contains a processor 4 and memory 5. The memory comprises instructions, which, when executed by the processor, cause the control device, to perform any method or combination of methods according to the present disclosure.

The dotted cone shape expanding between from the transducers 111,112 represents the listening zone 103 generated by the directional ultrasonic acoustic signals, where the audible sound is produced through non-linear interaction in the air. This configuration allows the electronic consumer device to create a localized listening area for a user, providing personalized audio without disturbing others in the vicinity, as described in the present disclosure.

From the above said, the following general conclusions can be drawn:

In various examples, the first and second ultrasonic transducers may be mounted on a rotatable platform of the electronic consumer device. The rotatable platform may be configured to adjust the direction of the first and second directional ultrasonic acoustic signals emitted by the first and second ultrasonic transducers in at least one angular degree of freedom. By mounting the ultrasonic transducers on a rotatable platform, the electronic consumer device may dynamically adjust the direction of the ultrasonic acoustic signals. This may allow for precise targeting of the spatial listening zone, thereby enhancing the user's listening experience. The rotatable platform may enable the device to accommodate changes in the user's position or to create multiple listening zones in different directions. The adjustment in at least one angular degree of freedom may provide flexibility in directing the ultrasonic signals, potentially allowing for both horizontal and vertical adjustments to optimize the formation of the spatial listening zone.

A rotatable platform may be understood as a movable base or structure capable of rotating around one or more axes. In this context, it may serve as a mounting point for the ultrasonic transducers, allowing them to be reoriented as needed. An angular degree of freedom may be understood as the ability to rotate or pivot around a specific axis. This may allow the platform to adjust the direction of the ultrasonic signals in a circular or arc-like manner. Directional ultrasonic acoustic signals may be understood as highly focused beams of ultrasonic waves that propagate in a specific direction with minimal dispersion. The ability to adjust these signals may enhance the precision and adaptability of the spatial listening zone creation.

In various examples, directing the first and second directional ultrasonic acoustic signals towards the spatial listening zone may include dynamically spatially adjusting the spatial listening zone based on a current user's position or user feedback. This dynamic adjustment may allow the electronic consumer device to adapt to changes in the user's location or preferences in real-time. By continuously updating the spatial listening zone, the device may maintain a consistent and high-quality audio experience for the user, even as they move within the environment. The use of user feedback may enable fine-tuning of the listening zone to accommodate individual preferences or specific acoustic conditions. This adaptive approach may enhance the overall effectiveness of the spatial audio system, potentially improving user satisfaction and the practicality of the technology in various real-world scenarios.

Dynamic spatial adjustment may be understood as the real-time modification of the size, shape, or location of the spatial listening zone. This may involve altering the parameters of the ultrasonic signals to reposition or reshape the area where the audible sound is produced. A current user's position may refer to the instantaneous location of the user within the device's operating environment, which may be determined through various sensing technologies. User feedback may be understood as input provided by the user, either explicitly through controls or implicitly through behavior, that indicates their preference for the audio experience. This feedback may be used to refine the spatial listening zone characteristics.

In various examples, dynamically spatially adjusting the spatial listening zone may comprise detecting a position of the user's head using a camera-based tracking system. The method may also include adjusting the listening position surround the detected position. By employing a camera-based tracking system, the electronic consumer device may continuously monitor the user's head position with high precision. This real-time tracking may enable the device to maintain an accurate spatial listening zone even as the user moves or changes orientation. Adjusting the listening position around the detected position may create a buffer zone that accounts for small movements of the user's head, potentially resulting in a more stable and comfortable listening experience. This approach may reduce the need for frequent minor adjustments and may provide a more seamless audio experience as the user naturally shifts position.

A camera-based tracking system may be understood as a visual sensing technology that uses one or more cameras to detect and monitor the position of objects or individuals in space. In this context, it may be specifically tuned to identify and track the user's head. The user's head position may be considered a key reference point for optimizing the spatial listening zone, as it typically corresponds to the location of the user's ears. Adjusting the listening position surround may be understood as modifying the spatial characteristics of the ultrasonic signals to create an effective listening area that encompasses not just the exact detected position, but also a small area around it. This may provide some flexibility in the system's response to user movement.

In various examples, dynamically spatially adjusting the spatial listening zone may include providing at least one directional microphone mounted on the rotatable platform aligned with the first and second ultrasonic transducers. The system may execute a two-dimensional acoustic search pattern with the rotatable platform, varying angular positions in horizontal and vertical planes. During this search pattern, the system may monitor a microphone signal from the at least one directional microphone, wherein the microphone signal may correspond to sound from the user. Based on the monitored microphone signal, the system may identify an angular position which corresponds to the user's position. The direction of the first and second directional ultrasonic acoustic signals emitted by the ultrasonic transducers may then be adjusted to align with the identified angular position. This approach may enable precise localization of the user within the environment, potentially improving the accuracy of the spatial listening zone placement. The two-dimensional search pattern may allow for a comprehensive scan of the surrounding space, thereby increasing the likelihood of correctly identifying the user's position even in complex acoustic environments.

A directional microphone may be understood as an acoustic sensor designed to be more sensitive to sounds coming from a specific direction while attenuating sounds from other directions. In this context, it may be used to locate the source of user-generated sounds.

A two-dimensional acoustic search pattern may be understood as a systematic method of scanning the surrounding space by rotating the platform in both horizontal and vertical planes. This may allow for a comprehensive survey of the acoustic environment to locate the user.

An angular position may be understood as a specific orientation of the rotatable platform, defined by its rotation in both horizontal and vertical planes. The identified angular position may represent the direction from which the user's sound is most clearly received.

In various examples, dynamically spatially adjusting the spatial listening zone may include providing at least one directional microphone mounted on the rotatable platform aligned with the first and second ultrasonic transducers. The method may execute a two-dimensional acoustic search pattern with the rotatable platform, varying angular positions in horizontal and vertical planes. During this search pattern, the method may monitor a microphone signal from the at least one directional microphone, where the microphone signal corresponds to sound from the user. An optimal angular position may be identified based on the monitored microphone signal, which corresponds to the user's position. The method may then adjust the direction of the first and second directional ultrasonic acoustic signals emitted by the ultrasonic transducers to align with the identified optimal angular position. This approach may enable precise localization of the user's position in three-dimensional space, potentially improving the accuracy of the spatial listening zone. The two-dimensional search pattern may allow for comprehensive coverage of the environment, increasing the likelihood of accurately detecting the user's position. By aligning the ultrasonic transducers with the identified optimal position, the method may enhance the efficiency of the spatial audio delivery and potentially reduce unwanted sound spillage to surrounding areas.

A directional microphone may be understood as an audio input device designed to be more sensitive to sounds coming from a specific direction while attenuating sounds from other directions. In this context, it may be used to detect and localize the user's voice or other sounds. A two-dimensional acoustic search pattern may be understood as a systematic scanning movement of the rotatable platform, covering both horizontal and vertical angles to thoroughly survey the acoustic environment. The optimal angular position may be understood as the orientation of the rotatable platform that results in the strongest or clearest reception of the user's sound, likely indicating the most direct path between the user and the microphone.

In various examples, the at least one directional microphone may comprise at least a first directional microphone and a second directional microphone. The method may involve monitoring a first audio signal from the first directional microphone and a second audio signal from the second directional microphone, where these signals correspond to the sound from the user. The method may compare the first audio signal to the second audio signal to determine a difference in signal strength. The optimal angular position may be identified based on this difference. By utilizing two directional microphones, the method may enable more precise localization of the user's position through triangulation. The comparison of signal strengths between the two microphones may provide additional spatial information, potentially improving the accuracy of user position detection. This dual-microphone approach in horizontal or/and vertical planes may also help in distinguishing the user's sound from background noise or reflections, thereby potentially enhancing the robustness of the spatial listening zone adjustment process. For example, the dual mic approach may be applied either in one plane (e.g. in the horizontal plane, or in vertical plane), or in two planes (i.e. in both: horizontal and vertical) by using 4 mics, or by using 3 directive microphones with forming a triangle, so that the directivity surface of all microphones will have cross-intersections, so that there will be an spatial area covered by all three directivity surfaces. The directivity surface is an artificial surface, which is formed in 3D-polar coordinates: h-angle, v-angle and the distance, where h-angle is an angular offset from the projection of the orthogonal line drawn to the membrane of the microphone to the horizontal plane, wherein the positive angular offset corresponds to the counter-clockwise angular direction considered from the top-view in respect to the microphone mounting position; v-angle is an angular offset of from the projection of the orthogonal line drawn to the membrane of the microphone to the vertical plane, wherein the positive angular offset corresponds to the counter-clockwise angular direction from the lateral right point of view in respect to the top-view; radius-coordinate shows the measured intensity of the received sound of the reference signal from the angular position h-angle, v-angle.

Signal strength in this context may be understood as the intensity or amplitude of the audio signal received by each microphone. A difference in signal strength between two microphones may indicate the relative direction of the sound source. Triangulation may be understood as a method of determining the location of a point by measuring angles to it from known points at either end of a fixed baseline. In this audio context, the two microphones serve as the known points, and the difference in their signals helps determine the angle to the user's position.

In various examples, dynamically spatially adjusting the spatial listening zone may include providing an infrared laser on the rotatable platform coupled with the first and second ultrasonic transducers. The infrared laser may be activated to emit an infrared laser beam aligned with the averaged angular max intensity directions in the horizontal and vertical planes of the first and second directional ultrasonic acoustic signals emitted by the first and second ultrasonic transducers. In other words, the laser beam shall be directed to the direction of maximal intensity of the produced audible signal, which normally corresponds to the averaged angular offsets of the first ultrasonic transducer and the second ultrasonic transducer (in both planes: horizontal and vertical). At least two cameras of the electronic consumer device, located at some distance from each other, may capture an image of the user and the position of the spot of the infrared beam. The captured image may be analyzed to determine an actual position of the directional ultrasonic acoustic signal relative to the user's position. This actual position may be compared to the user's position. Based on this comparison, the spatial listening zone may be adjusted. This approach may enable precise visual feedback on the alignment of the ultrasonic signals with the user's position. The use of an infrared laser may provide a non-intrusive method for visualizing the direction of the ultrasonic signals. The dual-camera setup may allow for depth perception and more accurate spatial analysis, potentially improving the precision of the listening zone adjustment.

An infrared laser may be understood as a device that emits a narrow beam of infrared light, which is invisible to the human eye but can be detected by certain cameras (e.g. by infrared cameras). In this context, it may serve as a visual indicator of the ultrasonic signal direction. The spot of the infrared beam may refer to the point where the infrared laser beam intersects with a surface, providing a visible reference point for the direction of the ultrasonic signals. Analyzing the captured image may involve using computer vision techniques to extract relevant spatial information from the visual data collected by the cameras. The actual position of the directional ultrasonic acoustic signal may be understood as the real-world location and orientation of the ultrasonic beam, as indicated by the infrared laser spot.

In various examples, dynamically spatially adjusting the spatial listening zone may include providing an infrared laser on the rotatable platform coupled with the first and second ultrasonic transducers. The infrared laser may be activated to emit an infrared beam aligned with the direction of the first and second directional ultrasonic acoustic signals. At least two cameras of the electronic consumer device, located at some distance from each other, may capture an image of the user and the position of the spot of the infrared beam. The captured image may be analyzed to determine an actual position of the directional ultrasonic acoustic signal relative to the user's position. This actual position may be compared to the user's position, and the spatial listening zone may be adjusted based on the comparison. This approach may enable precise visual feedback on the alignment of the ultrasonic signals with the user's position. The use of an infrared laser may provide an invisible guide for the ultrasonic signals, potentially improving the accuracy of the spatial listening zone adjustment without causing visual distraction to the user.

An infrared laser may be understood as a device that emits a narrow beam of infrared light, which is invisible to the human eye but can be detected by certain cameras. In this context, it may serve as a visual indicator of the averaged angular maximal intensity direction of ultrasonic signals emitted by two transducers. The spot of the infrared beam may be understood as the point where the infrared laser beam intersects with a surface, providing a visible reference point in the captured image for the direction of the ultrasonic signals. There are two ultrasonic signals emitted by two different transducers, the angular spatial orientations of which may be slightly different (to create an intersection of two ultrasonic beams).

An alternative way to define the positioning of the laser beam could be done if one would define the term "angular orientation of the ultrasonic speaker" (not transducer). As the ultrasonic speaker is a unit, which includes two ultrasonic transducer, the angular position of the laser beam would correspond the angular orientation of the ultrasonic speaker (i.e. the orthogonal line to the planar surface of the ultrasonic speaker). The second definition is less precise, from the mathematical point of view. On the other hand it is more understandable for non-specialists as it uses easier words.

In various examples, dynamically spatially adjusting the spatial listening zone may include receiving positional information from a portable user acoustic device operated at the user's position and communicatively coupled with the electronic consumer device. This positional information may represent a relative position of the portable user device to the electronic consumer device. The position of the first and second ultrasonic transducers may be adjusted based on the received positional information for spatially adjusting the spatial listening zone. This approach may use the user's personal device to provide accurate positioning data, potentially improving the precision of the spatial listening zone adjustment. The use of a portable user device may allow for continuous tracking of the user's position, enabling real-time adjustments to the spatial listening zone as the user moves.

In some examples, the positional information may comprise a signal from at least one microphone of the portable user device. The method may include transmitting a test signal through the first and second ultrasonic transducers. An audio feedback signal, captured by the at least one microphone of the portable user device in response to the test signal, may be received via the portable user device using existing wireless connections (e.g. Bluetooth, or WiFi). This audio feedback signal may be analyzed to determine a characteristic, such as an intensity, of the received test signal. The position of the first and second ultrasonic transducers may be adjusted based on this analysis. An angular correction control signal may be sent via the portable user device for adjusting the direction of the first and second directional ultrasonic acoustic signals to optimize the sound intensity at the position of the portable user device. This iterative process of test signal transmission, feedback analysis, and position adjustment may enable fine-tuning of the spatial listening zone, potentially resulting in improved audio quality and more precise targeting of the ultrasonic signals.

A portable user acoustic device may be understood as a personal electronic device capable of audio processing and communication, such as a smartphone or a wearable device. Positional information in this context may refer to data that indicates the location and orientation of the portable device relative to the electronic consumer device. A test signal may be understood as a specific audio pattern transmitted to evaluate the acoustic characteristics of the environment and the effectiveness of the current ultrasonic transducer settings. The angular correction control signal may be understood as instructions sent from the portable device to the electronic consumer device to adjust the direction of the ultrasonic signals based on the analysis of the received test signal.

In various examples, the method may include providing at least one speaker operating in an audible range as part of the consumer audio device for directly emitting sound in an audible frequency range based on the input audio signal. The method may also include selectively switching between a directive ultrasonic mode utilizing the first and second ultrasonic transducers and a conventional wide-dispersion mode utilizing the at least one electro-magnetic speaker based on the input audio signal. This dual-mode approach may allow the electronic consumer device to adapt its audio output strategy based on the characteristics of the input audio signal or user preferences. The directive ultrasonic mode may be employed for creating focused, individual listening zones, while the conventional wide-dispersion mode may be used for broader sound distribution. By selectively switching between these modes, the device may optimize its audio output for different scenarios, potentially enhancing versatility and user experience. The ability to use conventional speakers may also provide a fallback option for situations where directional audio is not necessary or desired.

A speaker operating in an audible range may be understood as a traditional electro-magnetic transducer that converts electrical signals into sound waves within the human hearing range, typically 20 Hz to 20 kHz. A directive ultrasonic mode may refer to the operation using ultrasonic transducers to create a focused, directional audio beam through the parametric audio effect. This mode may result in highly localized sound. A conventional wide-dispersion mode may be understood as the traditional method of sound reproduction where audio is broadcast over a wide area from the speaker, without the focused directionality of ultrasonic systems. Selectively switching between modes may involve analyzing the input audio signal or considering user settings to determine the most appropriate audio output method for the current situation.

In various examples, directing the first and second directional ultrasonic acoustic signals towards the spatial listening zone may include creating indirect beam paths for these signals. These indirect paths may form the spatial listening zone at the user's position after reflection from at least one reflective surface. This approach may create an individual listening zone located in a spatial area not directly accessible by acoustic waves due to the presence of obstacles. By utilizing reflective surfaces, the method may extend the reach of the ultrasonic signals to areas that would otherwise be obstructed. This technique may allow for more flexible placement of the electronic consumer device, as it may not need a direct line of sight to the user. The creation of indirect beam paths may enable the formation of spatial listening zones in complex environments with various obstacles, potentially increasing the versatility and applicability of the system in real-world settings. By utilizing indirect paths for at least one of the ultrasonic sound signals, the listening zone may acquire a more defined shape. In particular, the zone may become narrower or smaller and well-defined in all spatial directions. For instance, in a horizontal plane around a listener, the zone may be spatially all-around defined or limited. This indirect path technique may allow for precise control over the size and shape of the listening zone, potentially enhancing the focus and privacy of the audio experience. The ability to create listening zones in areas obstructed from direct line-of-sight may increase the flexibility and applicability of the system in complex environments with various obstacles or architectural features.

Indirect beam paths may be understood as routes taken by the ultrasonic signals that involve one or more reflections off surfaces before reaching the intended target area. These paths may allow the signals to navigate around obstacles or reach areas not in the direct line of sight of the transducers. Reflective surfaces in this context may refer to any objects or structures in the environment capable of bouncing ultrasonic waves, such as walls, ceilings, or furniture. The spatial area not directly accessible by acoustic waves may be understood as locations that cannot be reached by a straight-line path from the ultrasonic transducers due to intervening obstacles. This could include areas around corners or behind large objects. The ability to create listening zones in such areas may significantly enhance the flexibility and usefulness of the system in various real-world scenarios.

In various examples, the method may include providing a stereo sound signal to the user based on four ultrasonic transducers mounted on the rotatable platform. The first and second ultrasonic transducers may correspond to a left audio channel, while a third and fourth ultrasonic transducer may correspond to a right audio channel. The third and fourth ultrasonic transducers may operate in a frequency range that differs by at least 20 kHz from the frequency range of the first and second transducers. This configuration may enable the creation of a more immersive stereo soundstage within the spatial listening zone. By using separate transducer pairs for left and right channels, the system may achieve improved stereo separation and spatial audio effects. The significant frequency difference between the two transducer pairs may help to minimize interference between the left and right channels, potentially resulting in clearer stereo imaging. This approach may enhance the overall audio experience by providing more precise spatial cues and a wider soundstage within the confined listening zone.

A stereo sound signal may be understood as an audio format that uses two separate channels (left and right) to create a sense of directionality and space in the sound reproduction. In this context, it may involve using two pairs of ultrasonic transducers to create this effect within the spatial listening zone. The rotatable platform may be understood as a movable base on which the ultrasonic transducers are mounted, allowing for directional adjustment of the entire array. The frequency range difference of at least 20 kHz between the transducer pairs may be understood as a significant separation in the ultrasonic frequencies used for modulation. This separation may help to prevent cross-talk or interference between the left and right channels, potentially leading to improved stereo separation and clarity in the demodulated audible sound.

In various examples, the electronic consumer device may comprise a portable or stationary entertainment audio device. This may encompass a wide range of devices designed for audio playback and entertainment purposes. In the case of portable devices, this may include smartphones, tablets, portable speakers, or dedicated mobile audio players. These portable devices may use the directional audio capabilities to create personal listening zones in various environments, such as public transportation, shared offices, or outdoor spaces. The ability to generate a localized audio field may enhance privacy and minimize disturbance to others in close proximity. For stationary entertainment audio devices, this may include home theater systems, smart speakers, desktop computer audio setups, or high-end audio equipment. In a home setting, the directional audio technology may be used to create individual listening zones for different family members in a shared space, allowing each person to enjoy their preferred audio content without interference. In a home theater context, the system may be employed to optimize surround sound effects, directing specific audio channels to precise locations around the viewer.

A portable entertainment audio device may be understood as any mobile electronic device capable of audio playback that can be easily carried and used in various locations. These devices are typically battery-powered and designed for on-the-go use. A stationary entertainment audio device may refer to audio equipment that is generally set up in a fixed location and not intended for frequent movement. These devices are often larger, may require a constant power source, and are designed for optimal performance in a specific environment. Entertainment in this context may encompass a wide range of audio content, including music, podcasts, audiobooks, movies, TV shows, and games. The application of directional audio technology to these devices may enhance their functionality by providing more control over the audio environment and improving the overall listening experience.

In various examples, the first and second ultrasonic transducers may form a parametric speaker array. The audible sound signal produced by this array may be in a frequency range below 20 kHz, which corresponds to the typical human hearing range. Meanwhile, the first and second directional ultrasonic acoustic signals emitted by the transducers may be in a frequency range above 40 kHz. This configuration may use the principles of parametric acoustics to create highly directional audio. By using ultrasonic frequencies above 40 kHz, the system may generate narrow, focused beams of sound that can travel long distances with minimal dispersion. The interaction of these ultrasonic waves in air may result in the demodulation of the signal, producing audible sound within the target listening zone. This approach may allow for precise control over the audio delivery, potentially reducing sound spillage and enhancing privacy. The use of frequencies well above the audible range for the carrier signals may also minimize potential interference with other audio systems operating in the environment.

A parametric speaker array may be understood as a system that uses ultrasonic waves to create audible sound through non-linear interaction in air. This technology may exploit the parametric effect, where two high-frequency waves interact to produce a lower frequency component that falls within the audible range. The frequency range below 20 kHz may be understood as the range of sound waves that are typically audible to humans, encompassing all normal speech and music frequencies. The frequency range above 40 kHz may be understood as part of the ultrasonic spectrum, well above human hearing capabilities. These high frequencies may be used as carrier waves to transport the audio information, which is then demodulated in air to produce audible sound. This technique may allow for the creation of highly directional sound beams that can be precisely aimed at specific listening areas.

This configuration may use the non-linear interaction of the first and second directional ultrasonic acoustic signals in air within the spatial listening zone to generate a first sub-harmonic in the audible frequency range. This sub-harmonic may be obtained as a differential harmonic from the two ultrasonic acoustic waves emitted by the first and second ultrasonic transducers, and may substantially correspond to the desired audible sound signal. The non-linear interaction and generation of the first harmonic may occur substantially only within the spatial listening zone, which may correspond to the zone of intersection of the first and second directional ultrasonic acoustic signals. This approach may enable the creation of highly localized audible sound without the need for traditional speakers. By using ultrasonic frequencies above 40 kHz, the system may minimize interference with other electronic devices and reduce the risk of hearing damage from prolonged exposure to high-frequency sounds. The generation of audible sound through non-linear interactions may result in a highly directional audio beam, potentially enhancing privacy and reducing sound pollution in surrounding areas.

A parametric speaker array may be understood as a system that uses ultrasonic waves to generate audible sound through non-linear acoustic effects in the air. The audible frequency range typically refers to sounds between 20 Hz and 20 kHz, which is the range of human hearing. Ultrasonic frequencies above 40 kHz are well beyond human hearing capabilities. In such an array all pairs of ultrasonic transducers shall have emitted frequencies which are not interacting with each other at demodulation resulting in the audible frequencies. For this reason it is necessary that the difference between two carrying operating frequencies of different ultrasonic transducer pars is not lower than 20 kHz. An example of correct distribution of the carrying frequencies can be: 40 kHz - for the first pair of transducers, 60 kHz - for the second pair of transducers, 80 kHz - for the third pair of transducers, etc.

Non-linear interaction in this context refers to the phenomenon where high-intensity ultrasonic waves interact in air to produce lower-frequency components that fall within the audible range. A sub-harmonic may be understood as a frequency component that is lower than the fundamental frequencies of the original ultrasonic signals. The differential harmonic specifically refers to the frequency difference between the two ultrasonic signals, which in this case produces the desired audible sound. The zone of intersection may be understood as the area where the beams from both ultrasonic transducers overlap, creating the conditions necessary for the non-linear acoustic effects to occur.

A directional ultrasonic acoustic signal may also be referred to as directional ultrasonic sound beam. An ultrasonic sound beam may correspond to a highly focused acoustic signal operating in the ultrasonic frequency range, typically above 20 kHz, which is beyond the upper limit of human hearing. This beam exhibits exceptional directivity characteristics, meaning it propagates through air with minimal spatial dispersion compared to audible sound waves. The beam is generated using specialized ultrasonic transducers that emit high-frequency sound waves with a narrow radiation pattern. This narrow pattern is achieved through a combination of the transducer design and the physical properties of ultrasonic waves, which have much shorter wavelengths than audible sound. Directional ultrasonic sound beams maintain coherence over longer distances than conventional audio signals. This property allows for precise targeting of acoustic energy to specific areas in space. In various examples, these beams are often used in pairs or arrays. When two ultrasonic beams with slightly different frequencies intersect in air, they interact non-linearly, producing a difference tone in the audible range. This phenomenon, known as parametric audio or the acoustic heterodyne effect, effectively creates a virtual sound source within the beam's path. The ultrasonic sound beams exhibit strong directional properties, meaning that the acoustic energy is concentrated along a predetermined path or within a predetermined narrow angle, rather than spreading omnidirectionally.

An acoustic search pattern may refer to a systematic method or sequence of movements used to locate and optimize the direction of a sound source or a listener's position in relation to a directional audio system. In the context of directional ultrasonic sound beams, an acoustic search pattern may comprise one or more of the following. A predefined series of angular adjustments in both horizontal (azimuth) and vertical (elevation) planes. Controlled movements of the ultrasonic transducers or the platform they are mounted on. A process of scanning the surrounding space to detect optimal sound reception or transmission points. Continuous or discrete sampling of acoustic feedback at various positions during the search. An algorithm for analyzing the collected acoustic data to determine the best orientation for the ultrasonic beam. An acoustic search pattern may be implemented through, for example, movable mounting platforms using servo motors for controlling the orientation of ultrasonic transducers, electronic beam-forming techniques in transducer arrays. The goal of an acoustic search pattern is to efficiently locate the optimal direction for the ultrasonic beam to create the desired audible effect in the target listening zone, while minimizing sound spillage to other areas. This process can be automatic, adapting to changes in listener position or environmental conditions, or manually controlled by the user for fine-tuning the audio experience.

Identifying the optimal angular position based on the difference in signal strength of the first audio signal and the second audio signal may comprise identifying an angular error between the current orientation of the ultrasonic transducers and the desired target position. This process may comprise one or more of the following steps. Calculating the difference in signal strength or phase between two or more directional microphones strategically positioned on the device. Interpreting this difference as an angular deviation from the optimal position. Determining the magnitude and direction of the angular error in both azimuth (horizontal) and elevation (vertical) planes. In various example, this may be performed using one or more of the following steps. Comparing the amplitudes of signals received by pairs of microphones (e.g., left vs. right for azimuth, up vs. down for elevation). Analyzing the phase difference between microphone signals to estimate the direction of arrival of the sound. Using a differential control system where the error signal is proportional to the difference in microphone outputs. The angular error can be expressed as a vector with two components. Azimuthal error ($\Delta\theta$): The angular deviation in the horizontal plane. Elevational error ($\Delta\varphi$): The angular deviation in the vertical plane. The goal is to minimize both these error components, bringing them as close to zero as possible. This is typically achieved through an iterative process of adjustment and measurement, often implemented as a closed-loop control system. The optimal angular position may be reached when one or more of the following criteria are met: The difference in signal strength between paired microphones is minimized. The calculated angular error falls below a predefined threshold. The quality of the audio signal in the target listening zone is maximized.

The infrared laser utilized for adjusting the spatial listening zone in the directional audio system may be a low-power, solid-state device operating in the near-infrared to short-wavelength infrared spectrum. Typical wavelengths may range from 780 nm to 1550 nm, with common choices being 808 nm, 980 nm, or 1064 nm, depending on the specific requirements of the application. These wavelengths are chosen for their invisibility to the human eye and relatively low absorption by atmospheric water vapor. The laser can be operated in various modes, including continuous wave (CW), quasi-continuous wave (QCW), or pulsed mode. CW operation provides a constant output and is suitable for continuous tracking applications. QCW mode, with its periodic on-off cycles, can reduce average power consumption while maintaining functionality. Pulsed operation, typically in the nanosecond to microsecond range, can be employed for time-of-flight measurements or to increase peak power while keeping average power low for eye safety. Output power may be in the range of 1 to 5 mW, to ensure eye safety even in case of accidental exposure. The beam may be collimated to maintain a narrow profile over the operating distance, with divergence angles typically less than 1 mrad. Such beam profiles allow for precise co-alignment with the ultrasonic beam path. The laser diode may be coupled with beam-shaping optics to optimize the output characteristics.

The system may employ at least two infrared-sensitive cameras positioned at a known distance apart, forming a stereo configuration. This setup may enable precise three-dimensional positioning through triangulation techniques. The cameras may be equipped with sensors sensitive to the infrared spectrum, allowing them to detect both the infrared laser spot and the user's face, even in low-light conditions. Using this dual-camera arrangement, the system may calculate the 3D coordinates of the infrared laser spot by analyzing its position in the images from both cameras, assuming that the distance between two cameras and/or the positions of two cameras in respect to the position of the laser beam emitter, or/and ultrasonic speaker, or/and to some other reference point of the stationary audio system is known. Simultaneously, for example, facial recognition algorithms may process the stereo images to determine the 3D position of the user's face or head. The system may then compute the difference between these two sets of coordinates for determining the accuracy of the current beam alignment and calculating necessary adjustments to the ultrasonic beam direction. This image processing and coordinate calculation may be performed in real-time, potentially allowing for dynamic tracking and adjustment of the ultrasonic beam as the user moves. The system may require initial calibration to establish the spatial relationship between the cameras, the infrared laser, and the ultrasonic transducers. By utilizing this dual-camera approach, the system may provide the necessary data for precise three-dimensional tracking and alignment, potentially ensuring that the ultrasonic beam can be accurately directed to the optimal listening position. This method may offer a robust solution for maintaining the effectiveness of the individual listening zone as the user's position changes.

Sending control signals to adjust the spatial listening zone may be performed using one of the standard hardware and software devices and methods commonly employed in audio and control systems. This process may involve a combination of digital and analog components, as well as software algorithms, to ensure precise and responsive adjustment of the speaker's orientation. The hardware for sending these signals may include microcontrollers, digital signal processors (DSPs), or field-programmable gate arrays (FPGAs). These devices may be chosen based on their processing power, real-time capabilities, and integration potential with other system components. In some implementations, a dedicated system-on-chip (SoC) solution might be employed, combining processing and communication functions in a single package. Communication protocols for transmitting the angular correction control signals may vary depending on the system architecture. Common methods may include I2C, SPI, or UART for short-range, on-board communication. For wireless implementations, protocols such as Bluetooth Low Energy (BLE), Wi-Fi, or proprietary RF solutions might be utilized, allowing for flexible positioning of control units. Software methods for generating these control signals may involve closed-loop feedback systems, employing algorithms such as PID (Proportional-Integral-Derivative) control or more advanced techniques like adaptive or predictive control. These algorithms may process input from various sensors, including accelerometers, gyroscopes, or optical encoders, to determine the current angular position and calculate the necessary corrections. The actual control signal may be generated as a pulse-width modulated (PWM) signal, analog voltage, or digital data stream, depending on the requirements of the actuators (such as servo motors) responsible for adjusting the speaker's orientation. In more sophisticated systems, error correction and signal validation techniques may be implemented to ensure the reliability and accuracy of the control process.

A speaker operating in an audible range may refer to any acoustic transducer designed to produce sound waves within the human hearing spectrum, typically spanning from 20 Hz to 20 kHz. This broad category encompasses a variety of speaker technologies, each utilizing different principles to generate audible sound. Conventional electrodynamic speakers, which use a voice coil and permanent magnet to convert electrical signals into mechanical motion of a diaphragm, are perhaps the most common. However, other types offer unique characteristics and advantages. Electrostatic speakers, for instance, may employ a thin, electrically charged diaphragm suspended between two conductive plates, often praised for their clarity and low distortion. Planar magnetic speakers might use a flat diaphragm with embedded conductors placed in a magnetic field, combining benefits of both electrostatic and dynamic designs. Some innovative approaches may integrate audio output directly into display technologies, such as using the surface of an LCD or OLED screen as an emitter of flat acoustic waves.

The third and fourth ultrasonic transducers are operating in a frequency range, which at least by 20 kHz differs from the frequency range of the first and the second transducers This is to avoid cross channel interaction, e.g., one of the left transducers emits the ultrasonic waves, which being interacted with the ultrasonic wave emitted by any of the right transducers creates a non-desired audible acoustic waves.

The circuit transforms an audio digital signal into two high frequency signals (by shifting its spectrum) in such a way that being emitted by ultrasonic transducers and interacting with each other in the air, exploiting its non-linear properties for this frequency range, it results in the audio signal as a differential sub-harmonic.

The disclosed techniques have been described for creating individual spatial listening zones using ultrasonic transducers in electronic consumer devices such as TV sets, portable speakers, and other consumer audio playback devices. In general, other implementation could include, but are not limited to smartphones and tablets wearable devices, virtual and augmented reality systems, teleconferencing and remote collaboration tools, automotive audio systems, assistive listening devices, and others.

Although the disclosed techniques have been described with respect to certain preferred embodiments, equivalents and modifications will occur to others skilled in the art upon the reading and understanding of the specification. The present disclosure includes all such equivalents and modifications and is limited only by the scope of the appended claims.

Similar techniques may be readily applied to other kinds and types of audio systems, such as for example buildings, or any kind of outdoor or indoor sound system, which for example may comprise a surface of a solid-state material for reflecting the ultrasonic sound beams in areas otherwise hardly of not accessible for sound generation.

**Claims**

1. A method for creating an individual spatial listening zone for a user of an electronic consumer device, the method comprising at the electronic consumer device:

    - receiving an input audio signal, based on which a desired audible sound signal is to be output for the user;
    - processing the input audio signal to generate first and second ultrasonic electric audio signals, wherein the processing comprises modulating one of the first and second ultrasonic electric audio signals as carrier signal with a signal derived from the input audio signal;
    - providing the first ultrasonic electric audio signal to a first ultrasonic transducer, and the second ultrasonic electric audio signal to a second ultrasonic transducer, included in the electronic consumer device;
    - converting, by the first and second ultrasonic transducers, the first and second ultrasonic electric audio signals into first and second directional ultrasonic acoustic signals, respectively;
    - directing the first and second directional ultrasonic acoustic signals to a spatial listening zone, the spatial listening zone being a limited zone in space, in which the user is located; and
    - producing an audible sound signal for the user within the spatial listening zone, wherein the audible sound signal substantially corresponds to the desired audible sound signal based on the input audio signal, and wherein the audible sound signal is produced through non-linear interaction of the first and second directional ultrasonic acoustic signals in air within the spatial listening zone.

2. The method of claim 1, further comprising:

    - providing the first and second ultrasonic transducers mounted on a rotatable platform of the electronic consumer device, the rotatable platform being configured to adjust the direction of the first and second directional ultrasonic acoustic signals emitted by the first and second ultrasonic transducers in at least one angular degree of freedom.

3. The method of any of claims 1 to 2, wherein directing the first and second directional ultrasonic acoustic signals towards the spatial listening zone comprises:

- dynamically spatially adjusting the spatial listening zone based on a current user's position or user feedback.

4. The method of claim 3, wherein dynamically spatially adjusting the spatial listening zone comprises:

- detecting a position of the user's head using a camera-based tracking system; and
- adjusting the listening position surround the detected position.

5. The method of claim 3, wherein dynamically spatially adjusting the spatial listening zone comprises:

- providing at least one directional microphone mounted on the rotatable platform aligned with the first and second ultrasonic transducers;
- executing a two-dimensional acoustic search pattern with the rotatable platform, varying angular positions in horizontal and vertical planes;
- monitoring a microphone signal from the at least one directional microphone during the acoustic search pattern, wherein the microphone signal corresponds to sound from the user;
- identifying an optimal angular position based on the monitored microphone signal, which corresponds to the user's position; and
- adjusting the direction of the first and second directional ultrasonic acoustic signals emitted by the ultrasonic transducers to align with the identified optimal angular position.

6. The method of claim 5, wherein the at least one directional microphone comprises at least a first directional microphone and a second directional microphone, the method further comprising:

- monitoring a first audio signal from the first directional microphone and a second audio signal from the second directional microphone, wherein the first and second audio signals correspond to the sound from the user;
- comparing the first audio signal to the second audio signal to determine a difference in signal strength; and
- identifying the optimal angular position based on the difference.

7. The method of claim 3, wherein dynamically spatially adjusting the spatial listening zone comprises:

- providing an infrared laser on the rotatable platform coupled with the first and second ultrasonic transducers;
- activating the infrared laser to emit an infrared beam aligned with the direction of the first and second directional ultrasonic acoustic signals emitted by the first and second ultrasonic transducers;
- capturing, by at least two cameras of the electronic consumer device located at some distance from each other, an image of the user and the position of the spot of the infrared beam;
- analyzing the captured image to determine an actual position of the directional ultrasonic acoustic signal relative to the user's position;
- comparing the actual position to the user's position;
- adjusting the spatial listening zone based on the comparison.

8. The method of claim 3, wherein dynamically spatially adjusting the spatial listening zone comprises:

- receiving positional information from a portable user acoustic device operated by the user at the user's position and communicatively coupled with the electronic consumer device, the positional information representing a relative position of the portable user device to the electronic consumer device;
- adjusting the angular position of the first and second ultrasonic transducers based on the received positional information for spatially adjusting the spatial listening zone.

9. The method of claim 8, wherein the positional information comprises an audio feedback signal from at least one microphone of the portable user device, and wherein spatially adjusting the spatial listening zone comprises:

- transmitting a test signal through the first and second ultrasonic transducers;
- receiving, via the portable user device, the audio feedback signal captured by the at least one microphone in response to the test signal;
- analyzing the audio feedback signal to determine a characteristic of the received test signal;
- determining an angular correction control signal for adjusting the direction of the first and second directional ultrasonic acoustic signals emitted by the first and second ultrasonic transducers to optimize the characteristic at the position of the portable user device; and
- adjusting the angular position of the first and second ultrasonic transducers based on the angular correction control signal.

10. The method of one of the preceding claims, further comprising:

- providing at least one speaker operating in an audible range as part of the consumer audio device for directly emitting sound in an audible frequency range based on the input audio signal, and
- selectively switching between a directive ultrasonic mode utilizing the first and the second ultrasonic transducers and a conventional wide-dispersion mode utilizing the at least one conventional speaker emitting sound directly in an audible frequency range based on the input audio signal.

11. The method of one of the preceding claims, wherein directing the first and second directional ultrasonic acoustic signals towards the spatial listening zone comprises:

- creating indirect beam paths for the first and second directional ultrasonic acoustic signals to form the spatial listening zone at the user's position after reflection from at least one reflective surface, thus creating the individual listening zone located in a spatial area not directly accessible by acoustic waves due to presence of obstacles.

12. The method of one of the preceding claims, further comprising:

- providing a stereo sound signal to the user based on four ultrasonic transducers mounted on the rotatable platform, wherein the first and second ultrasonic transducers correspond to a left audio channel, and a third and fourth ultrasonic transducer correspond to a right audio channel, where the third and fourth ultrasonic transducers are operating in a frequency range, which at least by 20 kHz differs from the frequency range of the first and the second transducers.

13. The method of one of the preceding claims, wherein the electronic consumer device comprises a portable or stationary entertainment audio device.

14. The method of one of the preceding claims, wherein the first and second ultrasonic transducers form a parametric speaker array, wherein the audible sound signal is in a frequency range below 20 kHz, and the first and second directional ultrasonic acoustic signals are in a frequency range above 40 kHz.

15. The method of one of the preceding claims, wherein the non-linear interaction of the first and second directional ultrasonic acoustic signals in air within the spatial listening zone generates a first sub-harmonic in the audible frequency range obtained as a differential harmonic from two ultrasonic acoustic waves emitted by the first and the second ultrasonic transducers that substantially corresponds to the desired audible sound signal, the non-linear interaction and generation of the first harmonic occurring substantially only within the spatial listening zone, which corresponds to the zone of the intersection of the first and second directional ultrasonic acoustic signals emitted by the first and second ultrasonic transducers.

16. An electronic consumer device configured for creating an individual spatial listening zone for a user, comprising:

- a first ultrasonic transducer;
- a second ultrasonic transducer;
- a transforming circuit operatively coupled to the first and second ultrasonic transducers, the transforming circuit configured to:
- receive an input audio signal;
- process the input audio signal to generate first and second ultrasonic electric audio signals, wherein the processing comprises modulating one of the first and second ultrasonic electric audio signals as carrier signal with a signal derived from the input audio signal;
- provide the first ultrasonic electric audio signal to the first ultrasonic transducer and the second ultrasonic electric audio signal to the second ultrasonic transducer;
wherein the first and second ultrasonic transducers are configured to convert the first and second ultrasonic electric audio signals into first and second directional ultrasonic acoustic signals, respectively; and
- direct the first and second directional ultrasonic acoustic signals to a spatial listening zone, the spatial listening zone being a limited zone in space, in which the user is located;
wherein the first and second directional ultrasonic acoustic signals interact nonlinearly with air within the spatial listening zone, resulting in demodulation that produces an audible sound signal for the user that substantially corresponds to a desired audible sound signal based on the input audio signal, the audible sound signal being substantially confined to the spatial listening zone and substantially inaudible outside the spatial listening zone.

FIG. 1

FIG. 2

**300**

Cam$_1$ ... Cam$_M$

310

320

SrvMH$_1$   SrvMV$_1$   ...   SrvMH$_N$   SrvMV$_N$

330-1

IRLas$_1$   US$_1$

330-N

US$_N$   IRLas$_N$

LS$_1$ ... LS$_K$

ASrc$_1$ ... ASrc$_L$

340

FIG. 3

400

410

420

430

440

450

424

422

421

423

460

FIG. 4

FIG. 5

FIG. 6

FIG. 7

FIG. 8

Start — S10

Receiving input audio signal — S20

Generating first and second ultrasonic electric audio signals — S30

Providing first and second ultrasonic electric audio signals — S40

Converting first and second ultrasonic electric audio signals into first and second directional ultrasonic acoustic signals — S50

Directing first and second directional ultrasonic acoustic signals to spatial listening zone — S60

Producing audible sound signal for user in listening zone — S70

End — S80

FIG. 9

FIG. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/245090 A1 (ZHANG GUOJUN [CN] ET AL) 30 July 2020 (2020-07-30) | 1-4, 10-16 | INV. H04R1/40 |
| Y | * paragraph [0008] * | 5,6,8,9 | H04S7/00 |
| A | * paragraph [0019] * | 7 | |
| | * paragraph [0022] * | | |
| | * paragraphs [0024] - [0025] * | | |
| | * paragraph [0029] * | | |
| | * paragraph [0031] * | | |
| | * paragraph [0034] * | | |
| | * paragraph [0039] * | | |
| | * paragraphs [0050] - [0051] * | | |
| | * paragraphs [0053] - [0055] * | | |
| | * paragraph [0058] * | | |
| | * paragraph [0060] * | | |
| | * paragraphs [0065] - [0067] * | | |
| | * figure 1 * | | |
| | * figure 6 * | | |
| | ----- | | |
| Y | US 10 097 944 B2 (HARMAN BECKER AUTOMOTIVE SYSTEMS GMBH [DE]) 9 October 2018 (2018-10-09) * column 3, lines 12-49; figure 1 * * column 13, lines 18-47; figure 9 * | 5,6,8,9 | |
| | ----- | | TECHNICAL FIELDS SEARCHED (IPC) |
| A | US 10 694 313 B2 (NOVETO SYSTEMS LTD [IL]) 23 June 2020 (2020-06-23) * column 6, lines 30-43 * | 11 | H04R H04S |
| | ----- | | |
| A | US 9 924 290 B2 (NOVETO SYSTEMS LTD [IL]) 20 March 2018 (2018-03-20) * figure 1B * | 14 | |
| | ----- | | |
| A | US 2009/285404 A1 (HSU SHOU-HSIU [TW] ET AL) 19 November 2009 (2009-11-19) * paragraph [0025] * | 7 | |
| | ----- | | |
| | -/-- | | |

The present search report has been drawn up for all claims

| Place of search | Date of completion of the search | Examiner |
|---|---|---|
| The Hague | 7 February 2025 | Torcal Serrano, C |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

Europäisches
Patentamt

European
Patent Office

Office européen
des brevets

# EUROPEAN SEARCH REPORT

**Application Number**

EP 24 20 0226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 154 363 B2 (KYOCERA CORP [JP]) 11 December 2018 (2018-12-11) * column 13, line 48 - column 14, line 14 * ----- | 7 | |

TECHNICAL FIELDS
SEARCHED      (IPC)

The present search report has been drawn up for all claims

| Place of search | Date of completion of the search | Examiner |
|---|---|---|
| The Hague | 7 February 2025 | Torcal Serrano, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 0226

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | | Publication date | Patent family member(s) | | Publication date |
|---|---|---|---|---|---|
| US 2020245090 | A1 | 30-07-2020 | CN | 109803199 A | 24-05-2019 |
| | | | US | 2020245090 A1 | 30-07-2020 |
| US 10097944 | B2 | 09-10-2018 | CN | 106941645 A | 11-07-2017 |
| | | | JP | 6905824 B2 | 21-07-2021 |
| | | | JP | 2017123650 A | 13-07-2017 |
| | | | KR | 20170081566 A | 12-07-2017 |
| | | | US | 2017195815 A1 | 06-07-2017 |
| US 10694313 | B2 | 23-06-2020 | CN | 110383374 A | 25-10-2019 |
| | | | EP | 3566224 A1 | 13-11-2019 |
| | | | EP | 3566466 A1 | 13-11-2019 |
| | | | IL | 267838 A | 26-09-2019 |
| | | | IL | 267839 A | 26-09-2019 |
| | | | US | 2019349703 A1 | 14-11-2019 |
| | | | US | 2020245089 A1 | 30-07-2020 |
| | | | WO | 2018127901 A1 | 12-07-2018 |
| | | | WO | 2018127915 A1 | 12-07-2018 |
| US 9924290 | B2 | 20-03-2018 | CN | 104937660 A | 23-09-2015 |
| | | | EP | 2920783 A2 | 23-09-2015 |
| | | | IL | 223086 A | 28-09-2017 |
| | | | US | 2015304789 A1 | 22-10-2015 |
| | | | WO | 2014076707 A2 | 22-05-2014 |
| US 2009285404 | A1 | 19-11-2009 | TW | 200948165 A | 16-11-2009 |
| | | | US | 2009285404 A1 | 19-11-2009 |
| US 10154363 | B2 | 11-12-2018 | JP | 2017118375 A | 29-06-2017 |
| | | | US | 2017188171 A1 | 29-06-2017 |

EPO FORM P0459

For more details about this annex : see Official Journal of the European Patent Office, No. 12/82